# EUROPÄISCHE PATENTSCHRIFT

(11) **EP 3 421 302 B1**
(45) Veröffentlichungstag und Bekanntmachung des Hinweises auf die Patenterteilung: **10.11.2021**
(21) Anmeldenummer: 18182140.6
(22) Anmeldetag: 27.09.2011
(51) Int. Cl.: B60R 21/264

(54) **GASGENERATOR**
GAS GENERATOR
GÉNÉRATEUR DE GAZ

(30) Priorität: 15.10.2010 DE 202010014286 U
(43) Veröffentlichungstag der Anmeldung: 02.01.2019
(62) Teilanmeldung aus: 11813864.3
(73) Patentinhaber: ZF Airbag Germany GmbH, 84544 Aschau a. Inn (DE)
(72) Erfinder: Bierwirth, Sebastian, 83562 Rechtmehring (DE); Hofmann, Achim, 84577 Tüßling (DE); Neumayer, Hans-Peter, 84539 Ampfing (DE); Spitzenberger, Dieter, 84559 Kraiburg (DE); Nuiding, Hannes, 73667 Kaisersbach (DE); Schober, Thomas, 83527 Haag (DE); Bommer, Josef, 83547 Babensham (DE); Breddermann, Tobias, 84513 Erharting (DE); Schwebel, Dietmar, 86179 Augsburg (DE)
(74) Vertreter: ZF Patentabteilung - DIPS

(56) Entgegenhaltungen:
- EP-A1- 0 704 348
- DE-A1- 4 141 620
- US-A1- 2002 135 172
- US-A1- 2007 001 439

## Beschreibung

Die Erfindung betrifft einen Gasgenerator, insbesondere für eine Schutzeinrichtung in einem Fahrzeug nach dem Oberbegriff des Patentanspruchs 1. Die Erfindung betrifft ferner ein Gassackmodul für ein Fahrzeug.

Gasgeneratoren für Schutzeinrichtungen in einem Fahrzeug sind insbesondere dazu vorgesehen, bestimmte Teile anzutreiben (Aufstellen von Motorhauben, Straffen des Sicherheitsgurtes, Verschieben von Polstern oder dergleichen) oder Gassäcke aufzublasen, um einen Aufprall eines Fahrzeuginsassen auf harte Fahrzeugteile zu verhindern.

Die Anforderungen an die Effektivität eines Gasgenerators sind generell sehr hoch. In kürzester Zeit muss eine bestimmte Menge an Gas bereitgestellt werden, das nicht zu heiß und möglichst partikelfrei sein soll. Ein Gasgenerator sollte auch möglichst leicht sein und wenig Bauraum in Anspruch nehmen, damit z. B. im Falle des Einbaus in einem Lenkrad bestimmte Vorgaben des Lenkraddesigns eingehalten werden können.

Aus der Schrift EP 0 704 348 A1 ist ein Gasgenerator der eingangs genannten Art bekannt.

Die Erfindung verbessert eine solche bekannte Konstruktion hinsichtlich eines vorbestimmten orientierten Einbaus und Position einer Anzünderhülse.

Die Erfindung schafft einen kompakten und effektiven Gasgenerator mit einem sehr effizienten Aufbau, der den obigen Anforderungen genügt.

Bei dem Gasgenerator der Erfindung umfasst der Gasgenerator eine Anzünderhülse, die einen Anzünder und eine mit einer Verstärkerladung gefüllte Anzünderkammer wenigstens teilweise umschließt und an eine mit Treibstoff gefüllte erste Brennkammer angrenzt. Die Anzünderhülse weist eine von ihrer Mittelachse entfernte oder sich unsymmetrisch von der Mittelachse erstreckende Markierung auf, die eine vorbestimmte Orientierung der Anzünderhülse angibt. Die Markierung hilft dabei, Fehler bei der Montage der Anzünderhülse hinsichtlich deren Orientierung zu vermeiden.

Bei dem Gasgenerator der Erfindung ist erfindungsgemäß die Anzünderhülse versetzt zu einer Mittelachse eines Diffusors angeordnet, und ein Boden der Anzünderhülse liegt einem Deckenabschnitt des Diffusors gegenüber, wobei der Anzünderhülsenboden eine Schräge aufweist, die so auf eine Wölbung des Deckenabschnitts des Diffusors abgestimmt ist, dass die Anzünderhülse nur in der vorbestimmten Orientierung unter den Deckenabschnitt des Diffusors passt.

Vorteilhaft ist hier eine Gestaltung der Anzünderhülse vorgesehen, die so auf eine Gestaltung eines benachbarten Bauteils des Gasgenerators abgestimmt ist, dass eine Montage der Anzünderhülse im Gasgenerator nur in der vorbestimmten Orientierung möglich ist. Damit sind Fehler bei der Montage praktisch gänzlich ausgeschlossen.

Die Anzünderhülse kann - bezogen auf eine Mittelachse der Anzünderhülse - in Umfangsrichtung ungleichmäßig verteilte Überströmöffnungen aufweisen. Zweck dieser Maßnahme ist es, das aus der Anzünderhülse überströmende Heißgas, mit dem der Treibstoff der angrenzenden Brennkammer entzündet wird, auf bevorzugte Bereiche der Brennkammer zu lenken. Dies ermöglicht ein optimales Anzünden des Treibstoffs in der Brennkammer.

Im Einklang mit diesem Konzept kann eine vorbestimmte Orientierung der Anzünderhülse so festgelegt sein, dass die Überströmöffnungen nicht direkt auf einen außerhalb der Anzünderhülse angeordneten Filter gerichtet sind. Dadurch wird der Filter keiner unnötigen Belastung ausgesetzt, und es wird einer Beschädigung des Filters durch das aus der Anzünderhülse überströmende Heißgas, das mit Partikeln versetzt ist, vorgebeugt.

In der vorbestimmten Orientierung der Anzünderhülse definieren die Überströmöffnungen in Umfangsrichtung vorteilhaft einen maximalen Winkelbereich, der sich zu beiden Seiten einer Verbindungslinie zwischen der Mittelachse der Anzünderhülse und dem von der Mittelachse maximal entfernten Abschnitt des Filters erstreckt. Dadurch wird der Filter bestmöglich geschont.

Eine Auslegung der Überströmöffnungen, gemäß der der Winkelbereich Bereiche einschließt, in denen ein nicht durch Bauteile des Gasgenerators blockierter Abstand zum Filter maximal ist, ermöglicht eine optimale "Ausbeute" der aus den Überströmöffnungen austretenden Anzündstrahlen im Sinne einer maximalen Wirklänge. Der Treibstoff in der Brennkammer ist dabei nicht als Bauteil des Gasgenerators zu verstehen; im Gegenteil: es soll möglichst viel Treibstoff zwischen der Anzünderhülse und dem Filter von den Anzündstrahlen der abbrennenden Verstärkerladung erfasst werden.

Der Winkelbereich kann auch ein Brennkammerbauteil, insbesondere eine Brennkammerhülse, einschließen, welches eine zweite Brennkammer umgibt, die selbst wiederum wenigstens teilweise von der ersten Brennkammer umgeben ist.

In einer bevorzugten Ausführungsform ist der Winkelbereich stumpf und liegt vorzugsweise zwischen 90° und 135°, weiter vorzugsweise zwischen 100° und 120°, und beträgt weiter vorzugsweise etwa 110°.

Im Hinblick auf eine Optimierung des Brennraums, der die Anzünderhülse umgibt, ist eine Gestaltung der Anzünderhülse vorteilhaft, bei der sich die Anzünderhülse in axialer Richtung zu einem Boden der Anzünderhülse hin radial verjüngt. In diesem Fall steht aufgrund der Verjüngung außerhalb der Anzünderhülse mehr Raum für den Treibstoff zur Verfügung.

Der Gasgenerator kann ferner eine Brennkammerhülse umfassen, die eine mit Treibstoff gefüllte, einer zweiten Aktivierungsstufe des Gasgenerators zugeordnete zweite Brennkammer wenigstens teilweise umschließt. Beide Hülsen sind nebeneinander und vorzugsweise unterschiedlich versetzt zu einer Mittelachse des Gasgenerators angeordnet. Diese Anordnung führt zu einem äußerst kompakten und effizienten Aufbau eines zweistufigen Gasgenerators.

Besonders effizient ist eine Ausgestaltung, bei der der Abstand zwischen den Mittelachsen der Anzünderhülse und der Brennkammerhülse zwischen 22,5 und 27,5 mm, vorzugsweise zwischen 23,5 und 26,5 mm liegt und weiter vorzugsweise etwa 25 mm beträgt.

Bevorzugt liegt das Verhältnis des minimalen Innendurchmessers der Brennkammerhülse zum minimalen Innendurchmesser der Anzünderhülse zwischen 1,64 und 2,63, vorzugsweise zwischen 1,83 und 2,32. Weiter vorzugsweise beträgt dieses Verhältnis etwa 2,06.

Eine optimale Abstimmung zwischen kompaktem Aufbau des zweistufigen Generators und effektiver Kühlung und Filterung des erzeugten Gases ergibt sich zum einen durch eine wenigstens teilweise radiale Begrenzung der ersten Brennkammer durch einen - bezogen auf eine Mittelachse des Gasgenerators - wenigstens teilweise umlaufenden Filter, wobei das Verhältnis des Innendurchmessers des Filters zum minimalen Innendurchmesser der Anzünderhülse zwischen 3,19 und 4,76, vorzugsweise zwischen 3,50 und 4,27 liegt und weiter vorzugsweise etwa 3,85 beträgt.

Zum anderen wird bei einer solchen Filtergestaltung eine optimale Abstimmung bei einem Verhältnis des Innendurchmessers des Filters zum minimalen Innendurchmesser der Brennkammerhülse erreicht, das zwischen 1,66 und 2,11, vorzugsweise zwischen 1,76 und 1,99 liegt und weiter vorzugsweise etwa 1,87 beträgt.

Gemäß einer effizienten Ausgestaltung des Gasgenerators liegt das Verhältnis des Außendurchmessers des Gasgenerators zum minimalen Innendurchmesser der Anzünderhülse zwischen 4,09 und 5,98, vorzugsweise zwischen 4,46 und 5,39, und beträgt weiter vorzugsweise etwa 4,89. Unter dem Außendurchmessers des Gasgenerators ist dabei der Außendurchmesser des äußersten Gasgeneratorbauteils zu verstehen, beispielsweise eines Diffusors, wobei ein sich seitlich (radial) erstreckender Flansch nicht berücksichtigt wird.

Gemäß einer weiteren effizienten Ausgestaltung liegt das Verhältnis des Außendurchmessers des Gasgenerators zum minimalen Innendurchmesser der Brennkammerhülse zwischen 2,13 und 2,66, vorzugsweise zwischen 2,24 und 2,50, und beträgt weiter vorzugsweise etwa 2,38.

Ein besonderer Aufbau sieht vor, dass der axiale Abstand einer offenen Seite der Anzünderhülse von einem Boden eines Verschlusskörpers des Gasgenerators ungleich dem axialen Abstand einer offenen Seite der Brennkammerhülse vom Boden des Verschlusskörpers ist, wobei der Abstand der Anzünderhülse vorzugsweise größer ist. Da die Anzünderhülse und die Brennkammerhülse unterschiedliche Durchmesser haben, wird dadurch die Verwendung von im Wesentlichen gleich aufgebauten Trägerbauteilen für beide Hülsen ermöglicht, die auf gleicher Höhe im Verschlusskörperboden eingebaut sein können und beide sowohl einen auf die Anzünderhülse abgestimmten ersten Aufnahmeabschnitt als auch einen axial hierzu versetzten, auf die Brennkammerhülse abgestimmten zweiten Aufnahmeabschnitt aufweisen.

Im Hinblick auf den besonderen Mechanismus der zweiten Aktivierungsstufe, bei dem die aus der Brennkammerhülse herausführende Austrittsöffnung erst durch ein druckbedingtes Anheben der Brennkammerhülse entsteht, ist eine Halterung der Anzünderhülse und der Brennkammerhülse vorteilhaft, bei der die Anzünderhülse und die Brennkammerhülse auf einen ersten Anzünderträger bzw. auf einen zweiten Anzünderträger aufgesteckt sind, wobei die axiale Höhe des Kontaktbereichs zwischen der Anzünderhülse und dem ersten Anzünderträger größer ist als die axiale Höhe des Kontaktbereichs zwischen der Brennkammerhülse und dem zweiten Anzünderträger. Die Brennkammerhülse löst sich dann bereits nach einer geringen axialen Verschiebung vom zweiten Anzünderträger und gibt dadurch die gewünschte Austrittsöffnung frei. Bei der Anzünderhülse kann zwar auch eine axiale Verschiebung auftreten, eine Freigabe einer (zusätzlichen) Austrittsöffnung ist aber nicht vorgesehen.

Dementsprechend ist eine bevorzugte Ausführungsform des Gasgenerators so ausgelegt, dass sowohl die Anzünderhülse durch den beim Abbrand der Verstärkerladung entstehenden Druck als auch die Brennkammerhülse durch den beim Abbrand des Treibstoffs entstehenden Druck angehoben werden, vorzugsweise in Richtung eines Deckenabschnitts eines Diffusors des Gasgenerators. Durch das Anheben der Brennkammerhülse wird eine Austrittsöffnung freigegeben, vorzugsweise in Form eines Austrittspalts, die aus der Brennkammerhülse herausführt, wogegen durch das Anheben der Anzünderhülse keine Austrittsöffnung freigegeben wird. Letzteres ist nicht erwünscht, da in der Anzünderhülse bereits vorteilhaft positionierte Überströmöffnungen vorhanden sind, die spätestens beim Abbrand der Verstärkerladung freigegeben werden.

Vorzugsweise ist der Diffusor so ausgelegt, dass ein Deckenabschnitt die Bewegung der Anzünderhülse und die Bewegung der Brennkammerhülse begrenzt.

Der Gasgenerator kann einen Filter und ein eine Brennkammer wenigstens teilweise umschließendes Brennkammerbauteil umfassen, insbesondere eine Brennkammerhülse. Der Filter weist einen kritischen Filterabschnitt auf, der dem Brennkammerbauteil näher als die restlichen Filterbereiche kommt. Der kritische Filterabschnitt weist im Vergleich zu Bereichen des Filters, die an den kritischen Filterabschnitt angrenzen, eine verringerte Dicke auf. Insbesondere ist zwischen dem Brennkammerbauteil und dem kritischen Filterabschnitt ein Spalt gebildet. Diese Maßnahme stellt einen Überzündschutz dar. Es muss sichergestellt sein, dass der Treibstoff der zweiten Aktivierungsstufe während und gegebenenfalls nach dem Abbrand des Treibstoffs der ersten Aktivierungsstufe nicht selbsttätig (thermisch) gezündet wird. Dabei ist ein Wärmeeintrag auf den Treibstoff der zweiten Aktivierungsstufe durch das Abbrennen des Treibstoffs der ersten Aktivierungsstufe selbst nicht unbedingt kritisch. Allerdings könnte eine Aufheizung des Filters und speziell die danach (verzögernd wirkende) Wärmerückstrahlung des aufgeheizten Filters negative Auswirkungen haben, speziell im Bereich nahe der Brennkammer der zweiten Aktivierungsstufe. Die Verjüngung des kritischen Filterabschnitts schafft deshalb vorsorglich einen wärmeisolierenden Abstand (Luftspalt) zwischen dem Filter und dem Brennkammerbauteil.

Vorzugsweise ist das Material, aus dem der Filter gebildet ist, im kritischen Filterabschnitt höher verdichtet als in den angrenzenden Bereichen. Der kritische Filterabschnitt kann in diesem Fall einfach durch eine räumlich begrenzte Komprimierung des Filters hergestellt werden, ohne dass Material abgetragen werden muss.

Zur weiteren Verbesserung kann das Brennkammerbauteil wenigstens in dem Bereich, der dem kritischen Filterabschnitt gegenüberliegt, eine erhöhte Materialdicke aufweisen. Die Kombination der Materialverdickung des Brennkammerbauteils mit der gegenüberliegenden Filterverjüngung ergibt einen optimalen Überzündschutz.

Gemäß einer bevorzugten Anordnung erstreckt sich der Filter entlang einer umlaufenden Wand des Gasgenerators, die eine Kammer des Gasgenerators umgibt, in welcher das Brennkammerbauteil angeordnet ist.

Im Falle eines Brennkammerbauteils, das sich über eine größere axiale Höhe als der Filter erstreckt, ist es ausreichend, wenn das Brennkammerbauteil im Wesentlichen nur in dem axialen Bereich eine erhöhte Materialdicke aufweist, in dem sich auch der Filter erstreckt. Somit können Materialkosten und Gewicht eingespart werden.

Gemäß einer effizienten Ausgestaltung liegt das Verhältnis der minimalen Dicke des kritischen Filterabschnitts zur Dicke der angrenzenden Bereiche des Filters zwischen 0,43 und 0,93, vorzugsweise zwischen 0,53 und 0,78, und beträgt weiter vorzugsweise etwa 0,65.

Gemäß einer weiteren effizienten Ausgestaltung des Überzündschutzes liegt das Verhältnis der minimalen Dicke des kritischen Filterabschnitts zur maximalen Breite des Spalts zwischen 1,17 und 2,85, vorzugsweise zwischen 1,50 und 2,23, und beträgt weiter vorzugsweise etwa 1,83.

Eine besondere Gestaltung und Anordnung des Filters sieht vor, dass der Gasgenerator auf einer ersten axialen Stirnseite durch einen Diffusor mit einer im Wesentlichen axial verlaufenden Umfangswand geschlossen ist, wobei sich der Filter in axialer Richtung über die Umfangswand hinaus erstreckt.

Der Gasgenerator kann auch eine umlaufende Wand umfassen, die insbesondere eine Brennkammer umgibt, und einen Filter, der wenigstens teilweise entlang der Wand verläuft. Die Wand weist wenigstens einen Stützabschnitt auf. Der Stützabschnitt bildet eine axiale Halterung für den Filter und ist vorzugsweise einstückig mit der Wand ausgeführt. Vorteil dieser Wandhalterung für den Filter ist, dass sich der Filter im Inneren des Gasgenerators nicht unnötig über die gesamte Höhe erstrecken muss. Dadurch kann Filtermaterial eingespart werden, und es steht mehr Raum für Treibstoff in der vom Filter dann nur teilweise umgebenen Brennkammer zur Verfügung. Auf ein ansonsten notwendiges separates Stützelement kann verzichtet werden.

Es kann entweder nur ein Stützabschnitt vorgesehen sein, der durch eine vollständig umlaufende, vorzugsweise eingeprägte Sicke gebildet ist, oder es können mehrere Stützabschnitte durch vorzugsweise eingeprägte Sicken gebildet sein. Gemäß der letzteren Alternative können die Sicken in Umfangsrichtung voneinander beabstandet sein.

Gemäß einer bevorzugten Ausführungsform ist der Gasgenerator auf einer axialen Stirnseite durch einen Verschlusskörper geschlossen, und der bzw. die Stützabschnitte sind in einem hochgezogenen Rand des Verschlusskörpers gebildet.

Eine vorteilhafte Ausgestaltung sieht vor, dass sich der Filter nur mit einem radial äußeren Bereich auf dem bzw. den Stützabschnitten abstützt. Im Falle einer eingeprägten Sicke muss sich diese also nicht über die gesamte Dicke des ringförmigen Filters nach innen erstrecken.

Der Gasgenerator kann weiters eine mit einem Treibstoff gefüllte erste Brennkammer umfassen, die einer ersten Aktivierungsstufe des Gasgenerators zugeordnet ist und auf einer Seite durch einen Deckel, insbesondere einen Diffusor geschlossen ist. Zwischen dem Treibstoff und dem Deckel ist ein erster Füllkörper angeordnet. Der erste Füllkörper weist wenigstens eine, vorzugsweise kreisförmige, Aussparung auf. In die Aussparung ragt eine Hülse hinein, insbesondere eine Anzünderhülse, die der ersten Aktivierungsstufe des Gasgenerators zugeordnet ist, oder eine Brennkammerhülse, die einer zweiten Aktivierungsstufe des Gasgenerators zugeordnet ist. Ein so gestalteter Füllkörper hat, abgesehen von der Erfüllung seines Hauptzwecks, mehrere Vorteile. So unterstützt er die Stabilität der in die Aussparung hineinragenden Hülse hinsichtlich einem unerwünschten Verschieben oder Kippen in seitlicher Richtung. Außerdem erlaubt die besondere Ausgestaltung des Füllkörpers eine in axialer Richtung äußerst kompakte Bauform, da die Hülse in den Füllkörper hineinragt, sodass der Raum zwischen der Hülse und dem Deckel minimiert werden kann.

Insbesondere bei einem zweistufigen Gasgenerator weist der erste Füllkörper gemäß einer bevorzugten Ausführungsform zwei Aussparungen unterschiedlicher Größe auf, wobei in die kleinere Aussparung vorzugsweise die Anzünderhülse und in die größere Aussparung vorzugsweise die Brennkammerhülse hineinragt.

Eine effiziente Ausgestaltung sieht vor, dass das Verhältnis des Durchmessers der größeren Aussparung zum Durchmesser der kleineren Aussparung zwischen 1,52 und 2,25, vorzugsweise zwischen 1,67 und 2,03 liegt und weiter vorzugsweise etwa 1,84 beträgt.

Die Herstellung des ersten Füllkörpers kann vereinfacht werden, indem der erste Füllkörper wenigstens zweiteilig ausgeführt wird. Ein weiterer Vorteil der zweiteiligen Ausführung besteht darin, dass beim Einbau des Füllkörpers größere Toleranzen ausgeglichen werden können als bei einer einstückige Ausführung des Füllkörpers.

Besonders zweckmäßig ist in diesem Fall ein Design, bei dem die zwei Teilkörper des ersten Füllkörpers jeweils die Form eines Doppelhalbmonds aufweisen. Die Füllkörper können dann identische Formen haben und symmetrisch zueinander angeordnet werden.

Das bevorzugte Material für den Füllkörper ist Silikon, das einerseits nachgiebig ist, um den Treibstoff zur Vermeidung von Geräuschen unter Druck festzuhalten. Andererseits reagiert das Silikon im Aktivierungsfall des Gasgenerators nicht in unerwünschter Weise mit dem Treibstoff oder mit Bauteilen des Gasgenerators.

Der Gasgenerator kann einen - bezogen auf eine Mittelachse des Gasgenerators - radial abstehenden Generatorflansch zur Befestigung des Gasgenerators an einem Generatorträger umfassen. Der Generatorflansch hat im Wesentlichen die Form eines Rechtecks. Die rechteckige Gestaltung des Generatorflanschs ermöglicht eine platzsparende Gestaltung des Generatorträgers und des den Gasgenerator umgebenden Bauraums, insbesondere dann, wenn der Flansch nur geringfügig breiter als der Außendurchmesser des Außengehäuses des Gasgenerators ist. Unter einer im Wesentlichen rechteckigen Form ist dabei nicht unbedingt ein perfektes Rechteck zu verstehen; grundsätzlich rechteckige Formen mit abgerundeten Ecken, randseitigen Ausnehmungen, etc. sollen mit umfasst sein.

Bei einem bevorzugten Design ist vorgesehen, dass der Gasgenerator ein Außengehäuse mit einem vorzugsweise kreisförmigen Querschnitt hat, dessen Mittelachse durch den Mittelpunkt des Generatorflanschs verläuft.

Bezüglich der Dimensionen des Generatorflanschs hat sich für die Anbringung des Gasgenerators am Generatorträger ein Verhältnis von Länge zu Breite des Rechtecks zwischen 1,12 und 1,31, vorzugsweise zwischen 1,16 und 1,27 als vorteilhaft herausgestellt. Weiter vorzugsweise beträgt dieses Verhältnis etwa 1,21.

Ebenfalls bevorzugt wird ein Verhältnis der Länge des Rechtecks zum Außendurchmesser des Außengehäuses, das zwischen 1,24 und 1,48, vorzugsweise zwischen 1,30 und 1,42 liegt und weiter vorzugsweise etwa 1,36 beträgt.

Bezüglich der Breite des Generatorflanschs wird ein Verhältnis der Breite des Rechtecks zum Außendurchmesser des Außengehäuses bevorzugt, das zwischen 1,01 und 1,23, vorzugsweise zwischen 1,06 und 1,17 liegt und weiter vorzugsweise etwa 1,12 beträgt.

Der Gasgenerator kann eine Anzündereinheit umfassen, die eine Markierung aufweist. Die Markierung erleichtert einen Einbau der Anzündereinheit, bei dem diese eine vorbestimmte Orientierung hat. Dies ist insbesondere vor dem Hintergrund vorteilhaft, dass die elektrischen Anschlusspins des Anzünders orientiert im Gasgenerator verbaut werden müssen, um später ein korrektes Aufstecken des Gegensteckers in die Schnittstelle/Kavität des Anzünderträgers der Anzündereinheit sicherzustellen. Das Werkzeug, welches beim Zusammenbau des Gasgenerators die vormontierte Anzündeinheit dem Gasgeneratorbauteil orientiert zuführt, in das die Anzündereinheit eingesetzt wird, muss hierzu nicht in die sensible Schnittstelle des Anzünderträgers "hineinfahren". Somit werden die empfindlichen Anschlusspins des Anzünders keinem unnötigen Werkzeugkontakt ausgesetzt.

Als Markierung bietet sich insbesondere eine Einfräsung an.

Eine vereinfachte Handhabung ergibt sich dadurch, dass die Anzündereinheit eine vormontierte Einheit mit einem Anzünderträger und einem darin gehaltenen Anzünder ist, die vorzugsweise in eine Bodenöffnung eines Verschlusskörpers des Gasgenerators einsetzbar ist.

Der Gasgenerator kann einen Diffusor umfassen, der mit einem Verschlusskörper ein vorzugsweise im Wesentlichen rotationssymmetrisches Außengehäuse des Gasgenerators bildet, wobei die Wanddicke des Verschlusskörpers wenigstens abschnittsweise größer als die des Diffusors ist. Dieser Aspekt beruht auf der Erkenntnis, dass eine höhere Wanddicke des Verschlusskörpers für die Aufnahme einer oder mehrerer Anzündereinheiten von Vorteil ist, während eine vergleichsweise dünne Wandstärke des Diffusors ein erwünschtes Ausbauchen des Diffusors im Aktivierungsfall ermöglicht.

Dementsprechend ist bei einer bevorzugten Gestaltung vorgesehen, dass der Verschlusskörper einen im Wesentlichen ebenen Boden aufweist, in dem vorzugsweise wenigstens eine Öffnung zur Aufnahme eines Anzünderträgers gebildet ist. Wenigstens der Boden hat eine größere Wanddicke als der Diffusor.

Der Gasgenerator kann ein eine Brennkammer wenigstens teilweise umschließendes Brennkammerbauteil umfassen, insbesondere eine Brennkammerhülse, und einen Diffusor mit einem Deckenabschnitt. Bezogen auf eine Mittelachse des Diffusors variiert der axiale Abstand zwischen dem Brennkammerbauteil und dem Deckenabschnitt. Bei einer symmetrischen Wölbung des Deckenabschnitts und einer bezüglich der Mittelachse senkrechten Anordnung des dem Deckenabschnitt gegenüberliegenden Abschnitts des Brennkammerbauteils entspricht dies einer bezüglich der Mittelachse versetzten Anordnung des Brennkammerbauteils.

Vorzugsweise berührt das Brennkammerbauteil den Deckenabschnitt des Diffusors in einem nicht aktivierten Zustand des Gasgenerators wenigstens an einer Stelle. Aufgrund des an den anderen Stellen vorhandenen Abstands zwischen dem Brennkammerbauteil und dem Deckenabschnitt wird dadurch ein Kippen des Brennkammerbauteils (Brennkammerhülse) ermöglicht, wie es gemäß der besonderen Funktionsweise der zweiten Aktivierungsstufe des Gasgenerators vorgesehen ist.

Das Kippen wird begünstigt durch eine Ausgestaltung, bei der der axiale Abstand zwischen dem Brennkammerbauteil und dem Deckenabschnitt des Diffusors an der Mittelachse des Diffusors am größten ist und sich mit zunehmendem radialem Abstand von der Mittelachse vorzugsweise stetig verringert.

Gemäß einer bevorzugten Ausführungsform liegt der maximale Abstand zwischen dem Brennkammerbauteil und dem Deckenabschnitt des Diffusors zwischen 2,3 und 3,7 mm, vorzugsweise zwischen 2,7 und 3,3 mm, und beträgt weiter vorzugsweise etwa 3,0 mm.

Ebenso kann eine versetzt zur Mittelachse des Diffusors angeordnete Anzünderhülse vorgesehen sein, deren axialer Abstand zum Deckenabschnitt des Diffusors in ähnlicher Weise variiert, insbesondere indem sich der axiale Abstand der Anzünderhülse vom Deckenabschnitt des Diffusors mit zunehmendem radialem Abstand von der Mittelachse des Diffusors vorzugsweise stetig verringert.

Gemäß einer bevorzugten Ausführungsform liegt der maximale Abstand zwischen der Anzünderhülse und dem Deckenabschnitt des Diffusors zwischen 2,1 und 3,5 mm, vorzugsweise zwischen 2,5 und 3,1 mm, und beträgt weiter vorzugsweise etwa 2,8 mm.

Der Gasgenerator kann eine erste Brennkammer umfassen, die einer ersten Aktivierungsstufe des Gasgenerators zugeordnet ist, und eine zweite Brennkammer, die einer zweiten Aktivierungsstufe des Gasgenerators zugeordnet ist. Die zweite Brennkammer ist wenigstens teilweise von der ersten Brennkammer umgeben und weist ein kleineres Volumen als die erste Brennkammer auf. Diese Anordnung und Dimensionierung der Brennkammern ermöglicht einen auch in radialer Richtung äußerst kompakten Aufbau eines zweistufigen Gasgenerators.

Eine effiziente Ausgestaltung sieht vor, dass das Verhältnis des Volumens der ersten Brennkammer zum Volumen der zweiten Brennkammer zwischen 2,07 und 3,78, vorzugsweise zwischen 2,41 und 3,21 liegt und weiter vorzugsweise etwa 2,82 beträgt.

Eine weitere effiziente Ausgestaltung sieht vor, dass das Verhältnis des Volumens der ersten Brennkammer zum Volumen einer von der ersten Brennkammer wenigstens teilweise umgebenden Anzünderhülse zwischen 9,00 und 35,0, vorzugsweise zwischen 11,6 und 22,0 liegt und weiter vorzugsweise etwa 15,5 beträgt.

Die obigen Verhältnisse sind insbesondere bei einem Gasgeneratordesign vorteilhaft, bei dem das Verhältnis des Außendurchmessers eines Außengehäuses des Gasgenerators zur Höhe des Außengehäuses zwischen 1,38 und 1,78 liegt und weiter vorzugsweise etwa 1,57 beträgt.

Ein solcher Gasgenerator, dessen Bauhöhe, insbesondere die axiale Höhe eines Außengehäuses des Gasgenerators, zwischen 30 und 50 mm liegt und vorzugsweise etwa 40 mm beträgt, ist besonders geeignet für ein Fahrergassackmodul in einem Fahrzeug, mit einem Gassack, der ein Volumen von 40 bis 60 Liter aufweist.

Eine andere effiziente Ausgestaltung sieht vor, dass das Verhältnis des Volumens der ersten Brennkammer zum Volumen der zweiten Brennkammer zwischen 2,34 und 3,27, vorzugsweise zwischen 2,54 und 3,00 liegt und weiter vorzugsweise etwa 2,76 beträgt.

Eine weitere effiziente Ausgestaltung sieht vor, dass das Verhältnis des Volumens der ersten Brennkammer zum Volumen einer von der ersten Brennkammer wenigstens teilweise umgebenden Anzünderhülse zwischen 13,5 und 31,0, vorzugsweise zwischen 16,0 und 24,0 liegt und weiter vorzugsweise etwa 19,3 beträgt.

Die zuletzt angegebenen Verhältnisse sind insbesondere bei einem Gasgeneratordesign vorteilhaft, bei dem das Verhältnis des Außendurchmessers eines Außengehäuses des Gasgenerators zur Höhe des Außengehäuses zwischen 0,94 und 1,16 liegt und weiter vorzugsweise etwa 1,05 beträgt.

Ein solcher Gasgenerator, dessen Bauhöhe, insbesondere die axiale Höhe eines Außengehäuses des Gasgenerators, zwischen 50 und 70 mm liegt und vorzugsweise etwa 60 mm beträgt, ist besonders geeignet für ein Beifahrergassackmodul in einem Fahrzeug, mit einem Gassack, der ein Volumen von 60 bis 135 Liter aufweist.

Allgemein sind mit dem erfindungsgemäßen, äußerst kompaktem "disk-shape"-Gasgenerator sehr große Gassäcke aufblasbar.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine geschnittene Seitenansicht eines Gasgenerators nach einer ersten Bauform;
- Figur 2 eine geschnittene Seitenansicht eines Gasgenerators nach einer zweiten Bauform;
- Figur 3 eine geschnittene Draufsicht auf einen Diffusor eines erfindungsgemäßen Gasgenerators;
- Figur 4 eine geschnittene Seitenansicht des Diffusors aus Figur 3;
- Figur 5 eine geschnittene Draufsicht auf einen Diffusor eines erfindungsgemäßen Gasgenerators;
- Figur 6 eine seitliche Schnittansicht eines Anzünderträgers eines erfindungsgemäßen Gasgenerators;
- Figur 7 den Anzünderträger aus Figur 6 mit eingelegtem Dichtring;
- Figur 8 den Anzünderträger aus Figur 7 mit eingesetztem Anzünder;
- Figur 9 den Anzünderträger und den Anzünder aus Figur 9 im vormontierten Zustand;
- Figur 10 eine seitliche Schnittansicht eines Verschlusskörpers eines erfindungsgemäßen Gasgenerators;
- Figur 11 den Verschlusskörper aus Figur 10 mit eingesetzten Anzündereinheiten;
- Figur 12 eine Teildraufsicht auf den Verschlusskörper und die Anzündereinheiten aus Figur 11;
- Figur 13 eine perspektivische Ansicht einer Anzünderhülse eines Gasgenerators nach einer Ausführungsvariante;
- Figur 14 eine seitliche Schnittansicht der Anzünderhülse aus Figur 13;
- Figur 15 eine Schnittansicht entlang der Schnittlinie A-A in Figur 14;
- Figur 16 eine seitliche Schnittansicht einer Anzünderhülse nach einer erfindungsgemäßen ersten Ausführungsvariante;
- Figur 17 eine seitliche Schnittansicht einer Anzünderhülse nach einer erfindungsgemäßen zweiten Ausführungsvariante;
- Figur 18 eine Schnittansicht entlang der Schnittlinie A-A in Figur 17;
- Figur 19 eine perspektivische Ansicht einer Anzünderhülse nach einer Ausführungsvariante;
- Figur 20 eine seitliche Schnittansicht der Anzünderhülse aus Figur 19;
- Figur 21 eine Schnittansicht entlang der Schnittlinie A-A in Figur 20;
- Figur 22 eine Schnittansicht entlang der Schnittlinie C-C in Figur 20;
- Figur 23 eine perspektivische Ansicht einer Anzünderhülse nach einer Ausführungsvariante;
- Figur 24 eine seitliche Schnittansicht der Anzünderhülse aus Figur 23;
- Figur 25 eine Schnittansicht entlang der Schnittlinie A-A in Figur 24;
- Figur 26 eine Schnittansicht entlang der Schnittlinie C-C in Figur 25;
- Figur 27 eine in einem unteren Bereich des Gasgenerators teilweise geschnittene Draufsicht auf einen erfindungsgemäßen Gasgenerator;
- Figur 28 eine teilweise geschnittene perspektivische Ansicht eines Gasgenerators ohne Diffusor;
- Figur 29 eine seitliche Schnittansicht eines Gasgenerators nach der zweiten Bauform nach Aktivierung der zweiten Aktivierungsstufe;
- Figur 30 eine seitliche Schnittansicht eines Gasgenerators ohne Diffusor und Füllkörper;
- Figur 31 einen Ausschnitt einer seitlichen Schnittansicht eines Gasgenerators;
- Figur 32 eine Draufsicht auf ein Füllkörperteil für die erste Brennkammer eines erfindungsgemäßen Gasgenerators nach einer Ausführungsvariante;
- Figur 33 eine perspektivische Ansicht des Füllkörperteils aus Figur 32;
- Figur 34 eine in einem oberen Bereich des Gasgenerators geschnittene Draufsicht auf einen erfindungsgemäßen Gasgenerator;
- Figur 35 eine Draufsicht auf einen Filter eines erfindungsgemäßen Gasgenerators;
- Figur 36 eine Schnittansicht des Filters entlang der Linie A-A in Figur 35; und
- Figur 37 eine schematische seitliche Schnittansicht eines erfindungsgemäßen Gasgenerators nach der ersten Bauform in einer Ausführungsvariante.
Somit werden die empfindlichen Anschlusspins des Anzünders keinem unnötigen Werkzeugkontakt ausgesetzt.

Als Markierung bietet sich insbesondere eine Einfräsung an.

Eine vereinfachte Handhabung ergibt sich dadurch, dass die Anzündereinheit eine vormontierte Einheit mit einem Anzünderträger und einem darin gehaltenen Anzünder ist, die vorzugsweise in eine Bodenöffnung eines Verschlusskörpers des Gasgenerators einsetzbar ist.

Gemäß einem elften Hauptaspekt der Erfindung umfasst der Gasgenerator einen Diffusor, der mit einem Verschlusskörper ein vorzugsweise im Wesentlichen rotationssymmetrisches Außengehäuse des Gasgenerators bildet, wobei die Wanddicke des Verschlusskörpers wenigstens abschnittsweise größer als die des Diffusors ist. Dieser Aspekt beruht auf der Erkenntnis, dass eine höhere Wanddicke des Verschlusskörpers für die Aufnahme einer oder mehrerer Anzündereinheiten von Vorteil ist, während eine vergleichsweise dünne Wandstärke des Diffusors ein erwünschtes Ausbauchen des Diffusors im Aktivierungsfall ermöglicht.

Dementsprechend ist bei einer bevorzugten Gestaltung vorgesehen, dass der Verschlusskörper einen im Wesentlichen ebenen Boden aufweist, in dem vorzugsweise wenigstens eine Öffnung zur Aufnahme eines Anzünderträgers gebildet ist. Wenigstens der Boden hat eine größere Wanddicke als der Diffusor.

Gemäß einem zwölften Hauptaspekt der Erfindung umfasst der Gasgenerator ein eine Brennkammer wenigstens teilweise umschließendes Brennkammerbauteil, insbesondere eine Brennkammerhülse, und einen Diffusor mit einem Deckenabschnitt. Bezogen auf eine Mittelachse des Diffusors variiert der axiale Abstand zwischen dem Brennkammerbauteil und dem Deckenabschnitt. Bei einer symmetrischen Wölbung des Deckenabschnitts und einer bezüglich der Mittelachse senkrechten Anordnung des dem Deckenabschnitt gegenüberliegenden Abschnitts des Brennkammerbauteils entspricht dies einer bezüglich der Mittelachse versetzten Anordnung des Brennkammerbauteils.

Vorzugsweise berührt das Brennkammerbauteil den Deckenabschnitt des Diffusors in einem nicht aktivierten Zustand des Gasgenerators wenigstens an einer Stelle. Aufgrund des an den anderen Stellen vorhandenen Abstands zwischen dem Brennkammerbauteil und dem Deckenabschnitt wird dadurch ein Kippen des Brennkammerbauteils (Brennkammerhülse) ermöglicht, wie es gemäß der besonderen Funktionsweise der zweiten Aktivierungsstufe des Gasgenerators vorgesehen ist.

Das Kippen wird begünstigt durch eine Ausgestaltung, bei der der axiale Abstand zwischen dem Brennkammerbauteil und dem Deckenabschnitt des Diffusors an der Mittelachse des Diffusors am größten ist und sich mit zunehmendem radialem Abstand von der Mittelachse vorzugsweise stetig verringert.

Gemäß einer bevorzugten Ausführungsform liegt der maximale Abstand zwischen dem Brennkammerbauteil und dem Deckenabschnitt des Diffusors zwischen 2,3 und 3,7 mm, vorzugsweise zwischen 2,7 und 3,3 mm, und beträgt weiter vorzugsweise etwa 3,0 mm.

Ebenso kann eine versetzt zur Mittelachse des Diffusors angeordnete Anzünderhülse vorgesehen sein, deren axialer Abstand zum Deckenabschnitt des Diffusors in ähnlicher Weise variiert, insbesondere indem sich der axiale Abstand der Anzünderhülse vom Deckenabschnitt des Diffusors mit zunehmendem radialem Abstand von der Mittelachse des Diffusors vorzugsweise stetig verringert.

Gemäß einer bevorzugten Ausführungsform liegt der maximale Abstand zwischen der Anzünderhülse und dem Deckenabschnitt des Diffusors zwischen 2,1 und 3,5 mm, vorzugsweise zwischen 2,5 und 3,1 mm, und beträgt weiter vorzugsweise etwa 2,8 mm.

Gemäß einem dreizehnten Hauptaspekt der Erfindung umfasst der Gasgenerator eine erste Brennkammer, die einer ersten Aktivierungsstufe des Gasgenerators zugeordnet ist, und eine zweite Brennkammer, die einer zweiten Aktivierungsstufe des Gasgenerators zugeordnet ist. Die zweite Brennkammer ist wenigstens teilweise von der ersten Brennkammer umgeben und weist ein kleineres Volumen als die erste Brennkammer auf. Diese Anordnung und Dimensionierung der Brennkammern ermöglicht einen auch in radialer Richtung äußerst kompakten Aufbau eines zweistufigen Gasgenerators.

Eine effiziente Ausgestaltung sieht vor, dass das Verhältnis des Volumens der ersten Brennkammer zum Volumen der zweiten Brennkammer zwischen 2,07 und 3,78, vorzugsweise zwischen 2,41 und 3,21 liegt und weiter vorzugsweise etwa 2,82 beträgt.

Eine weitere effiziente Ausgestaltung sieht vor, dass das Verhältnis des Volumens der ersten Brennkammer zum Volumen einer von der ersten Brennkammer wenigstens teilweise umgebenden Anzünderhülse zwischen 9,00 und 35,0, vorzugsweise zwischen 11,6 und 22,0 liegt und weiter vorzugsweise etwa 15,5 beträgt.

Die obigen Verhältnisse sind insbesondere bei einem Gasgeneratordesign vorteilhaft, bei dem das Verhältnis des Außendurchmessers eines Außengehäuses des Gasgenerators zur Höhe des Außengehäuses zwischen 1,38 und 1,78 liegt und weiter vorzugsweise etwa 1,57 beträgt.

Ein solcher Gasgenerator, dessen Bauhöhe, insbesondere die axiale Höhe eines Außengehäuses des Gasgenerators, zwischen 30 und 50 mm liegt und vorzugsweise etwa 40 mm beträgt, ist besonders geeignet für ein Fahrergassackmodul in einem Fahrzeug, mit einem Gassack, der ein Volumen von 40 bis 60 Liter aufweist.

Eine andere effiziente Ausgestaltung sieht vor, dass das Verhältnis des Volumens der ersten Brennkammer zum Volumen der zweiten Brennkammer zwischen 2,34 und 3,27, vorzugsweise zwischen 2,54 und 3,00 liegt und weiter vorzugsweise etwa 2,76 beträgt.

Eine weitere effiziente Ausgestaltung sieht vor, dass das Verhältnis des Volumens der ersten Brennkammer zum Volumen einer von der ersten Brennkammer wenigstens teilweise umgebenden Anzünderhülse zwischen 13,5 und 31,0, vorzugsweise zwischen 16,0 und 24,0 liegt und weiter vorzugsweise etwa 19,3 beträgt.

Die zuletzt angegebenen Verhältnisse sind insbesondere bei einem Gasgeneratordesign vorteilhaft, bei dem das Verhältnis des Außendurchmessers eines Außengehäuses des Gasgenerators zur Höhe des Außengehäuses zwischen 0,94 und 1,16 liegt und weiter vorzugsweise etwa 1,05 beträgt.

Ein solcher Gasgenerator, dessen Bauhöhe, insbesondere die axiale Höhe eines Außengehäuses des Gasgenerators, zwischen 50 und 70 mm liegt und vorzugsweise etwa 60 mm beträgt, ist besonders geeignet für ein Beifahrergassackmodul in einem Fahrzeug, mit einem Gassack, der ein Volumen von 60 bis 135 Liter aufweist.

Allgemein sind mit dem erfindungsgemäßen, äußerst kompaktem "disk-shape"-Gasgenerator sehr große Gassäcke aufblasbar.

Weitere Merkmale und Vorteile der Erfindung ergeben sich aus der nachfolgenden Beschreibung und aus den beigefügten Zeichnungen, auf die Bezug genommen wird. In den Zeichnungen zeigen:

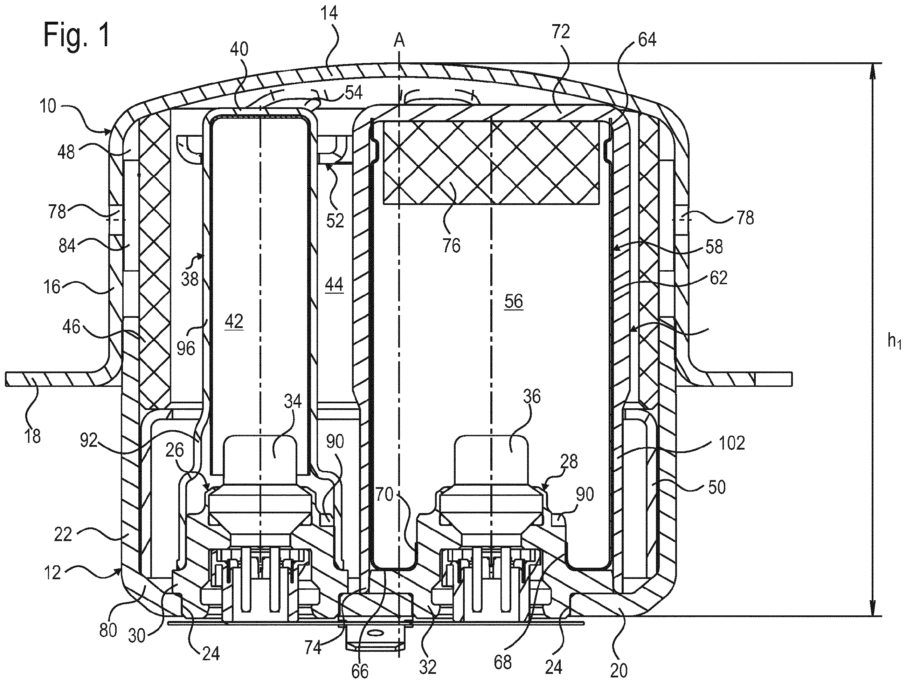

- Figur 1 eine geschnittene Seitenansicht eines erfindungsgemäßen Gasgenerators nach einer ersten Bauform;

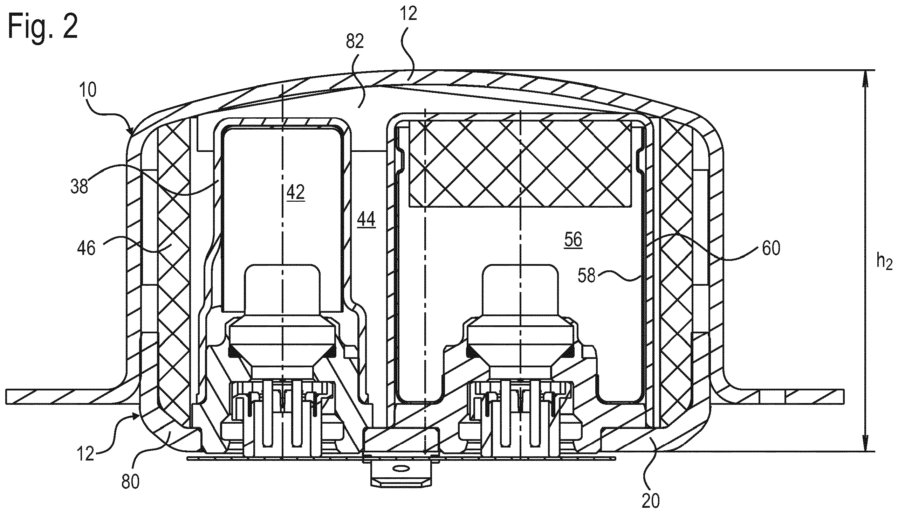

- Figur 2 eine geschnittene Seitenansicht eines erfindungsgemäßen Gasgenerators nach einer zweiten Bauform;

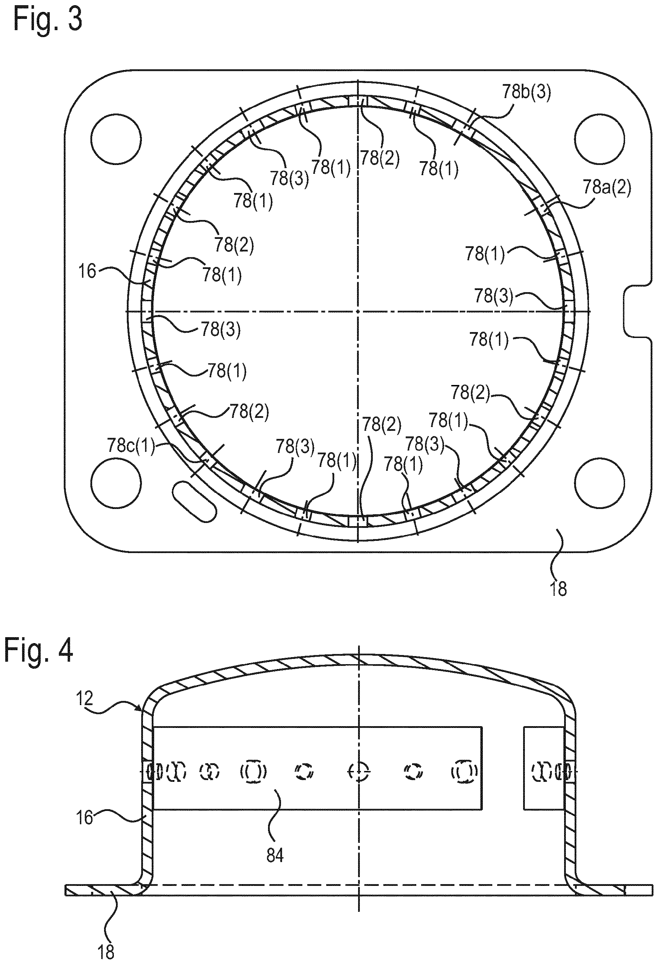

- Figur 3 eine geschnittene Draufsicht auf einen Diffusor eines erfindungsgemäßen Gasgenerators;
- Figur 4 eine geschnittene Seitenansicht des Diffusors aus Figur 3;

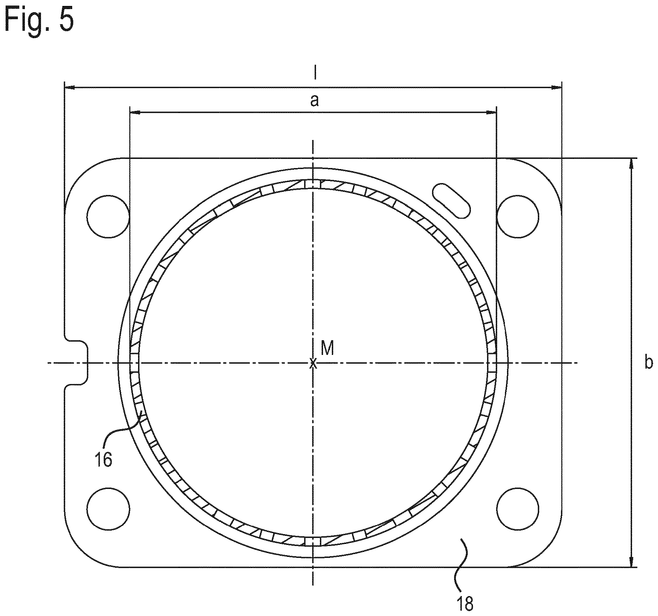

- Figur 5 eine geschnittene Draufsicht auf einen Diffusor eines erfindungsgemäßen Gasgenerators;

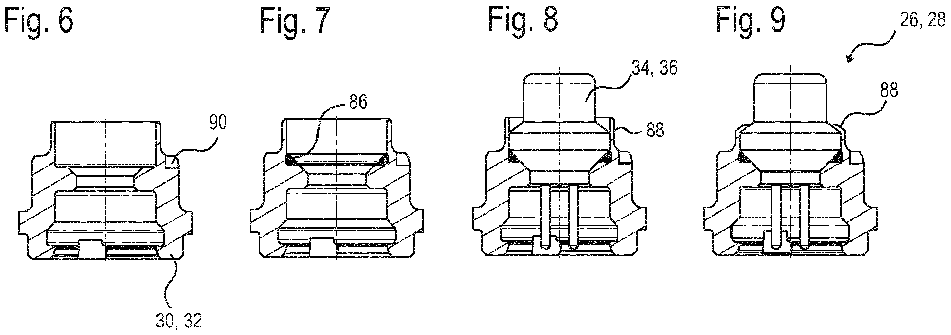

- Figur 6 eine seitliche Schnittansicht eines Anzünderträgers eines erfindungsgemäßen Gasgenerators;
- Figur 7 den Anzünderträger aus Figur 6 mit eingelegtem Dichtring;
- Figur 8 den Anzünderträger aus Figur 7 mit eingesetztem Anzünder;
- Figur 9 den Anzünderträger und den Anzünder aus Figur 9 im vormontierten Zustand;

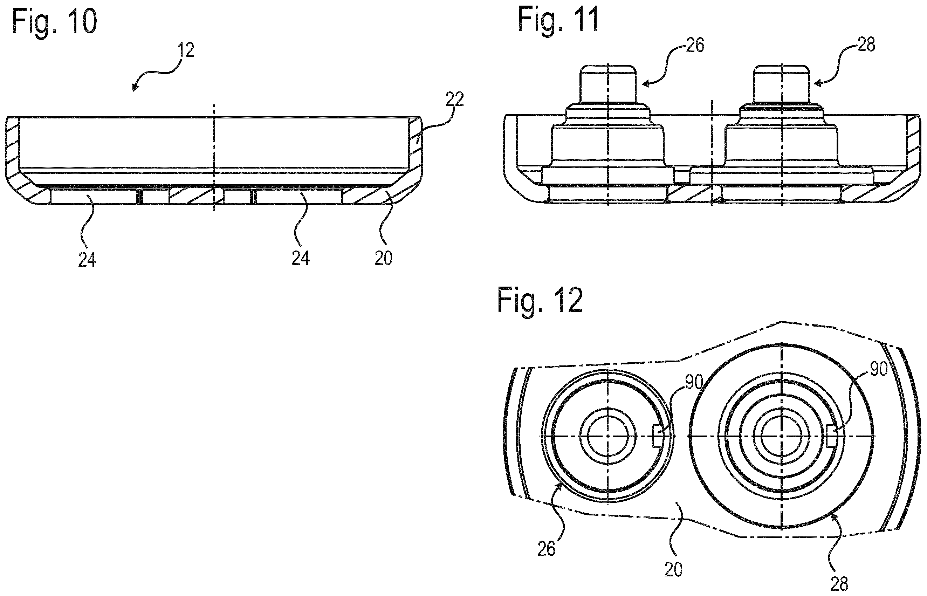

- Figur 10 eine seitliche Schnittansicht eines Verschlusskörpers eines erfindungsgemäßen Gasgenerators;
- Figur 11 den Verschlusskörper aus Figur 10 mit eingesetzten Anzündereinheiten;
- Figur 12 eine Teildraufsicht auf den Verschlusskörper und die Anzündereinheiten aus Figur 11;

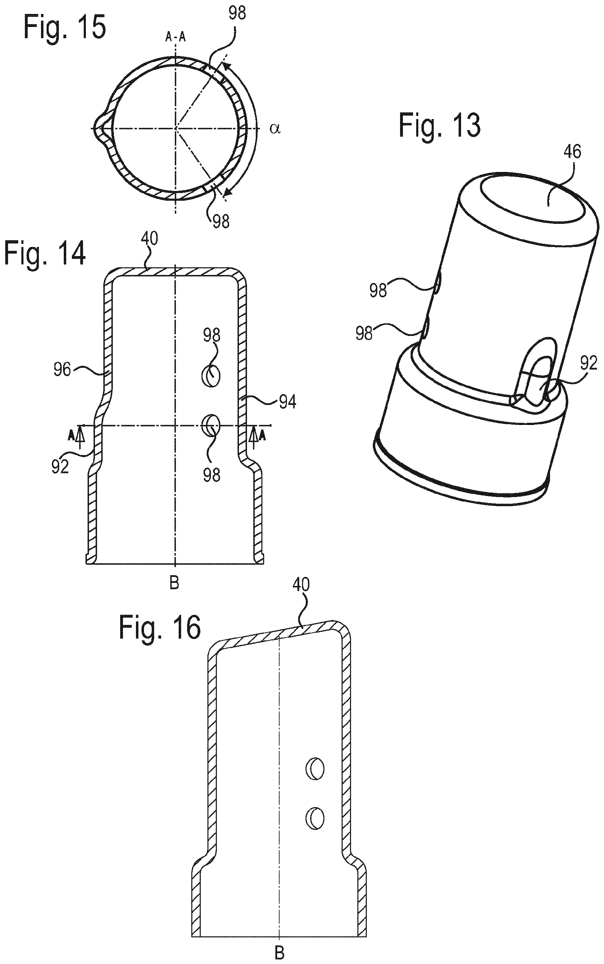

- Figur 13 eine perspektivische Ansicht einer Anzünderhülse eines erfindungsgemäßen Gasgenerators nach einer ersten Ausführungsvariante;
- Figur 14 eine seitliche Schnittansicht der Anzünderhülse aus Figur 13;
- Figur 15 eine Schnittansicht entlang der Schnittlinie A-A in Figur 14;
- Figur 16 eine seitliche Schnittansicht einer Anzünderhülse nach einer zweiten Ausführungsvariante;

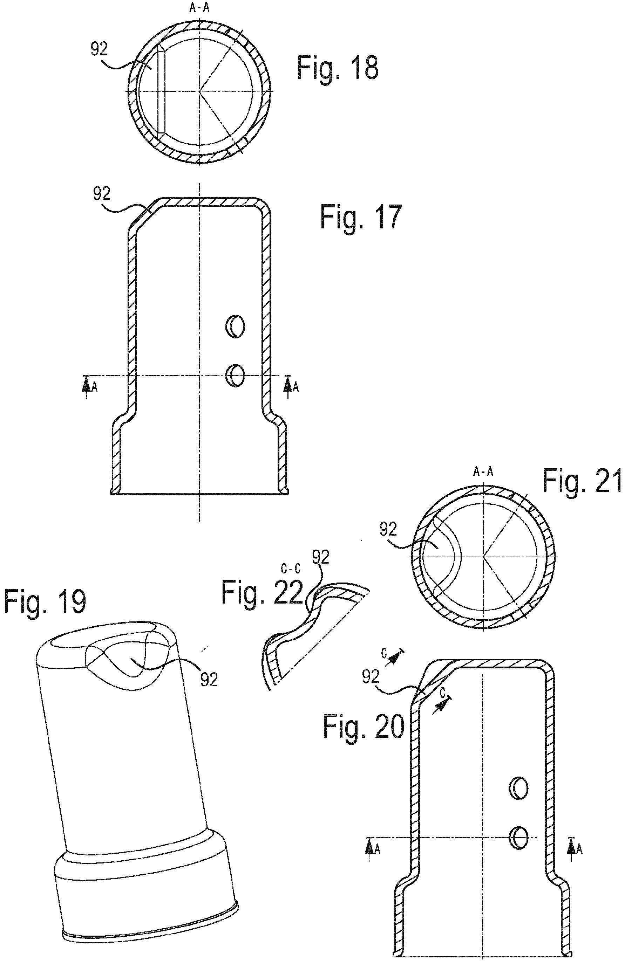

- Figur 17 eine seitliche Schnittansicht einer Anzünderhülse nach einer dritten Ausführungsvariante;
- Figur 18 eine Schnittansicht entlang der Schnittlinie A-A in Figur 17;
- Figur 19 eine perspektivische Ansicht einer Anzünderhülse nach einer vierten Ausführungsvariante;
- Figur 20 eine seitliche Schnittansicht der Anzünderhülse aus Figur 19;
- Figur 21 eine Schnittansicht entlang der Schnittlinie A-A in Figur 20;
- Figur 22 eine Schnittansicht entlang der Schnittlinie C-C in Figur 20;

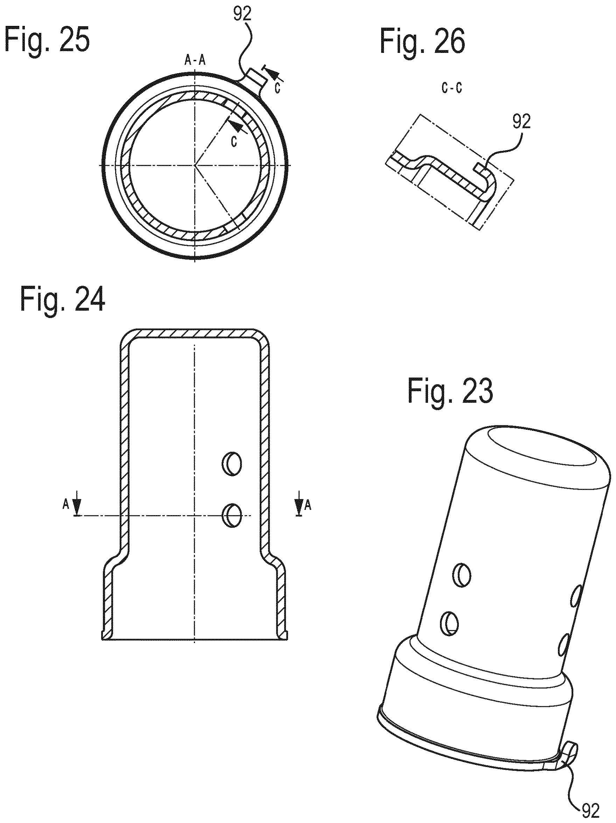

- Figur 23 eine perspektivische Ansicht einer Anzünderhülse nach einer fünften Ausführungsvariante;
- Figur 24 eine seitliche Schnittansicht der Anzünderhülse aus Figur 23;
- Figur 25 eine Schnittansicht entlang der Schnittlinie A-A in Figur 24;
- Figur 26 eine Schnittansicht entlang der Schnittlinie C-C in Figur 25;

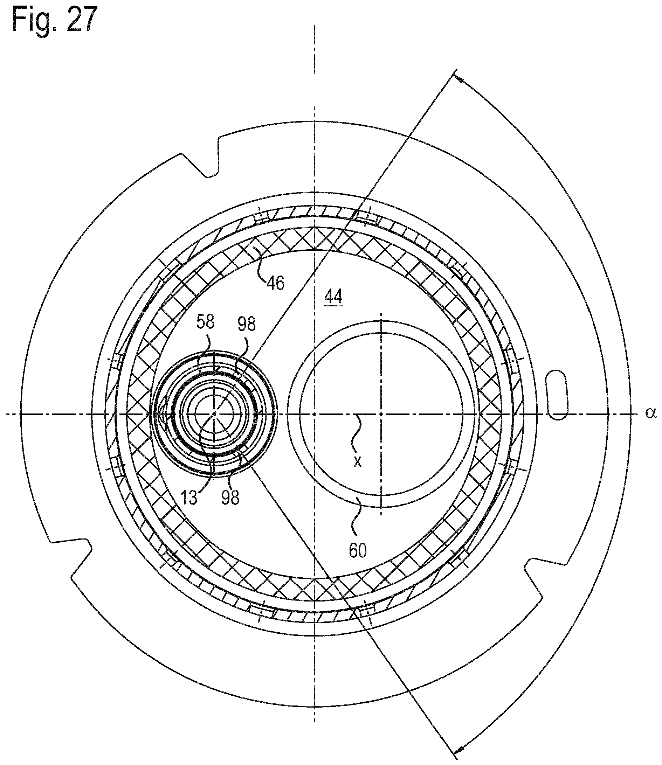

- Figur 27 eine in einem unteren Bereich des Gasgenerators teilweise geschnittene Draufsicht auf einen erfindungsgemäßen Gasgenerator;

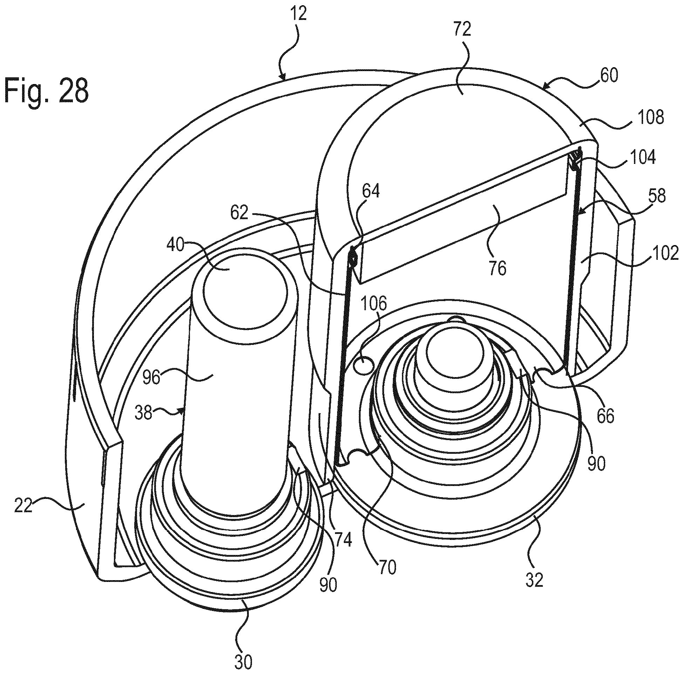

- Figur 28 eine teilweise geschnittene perspektivische Ansicht eines erfindungsgemäßen Gasgenerators ohne Diffusor;

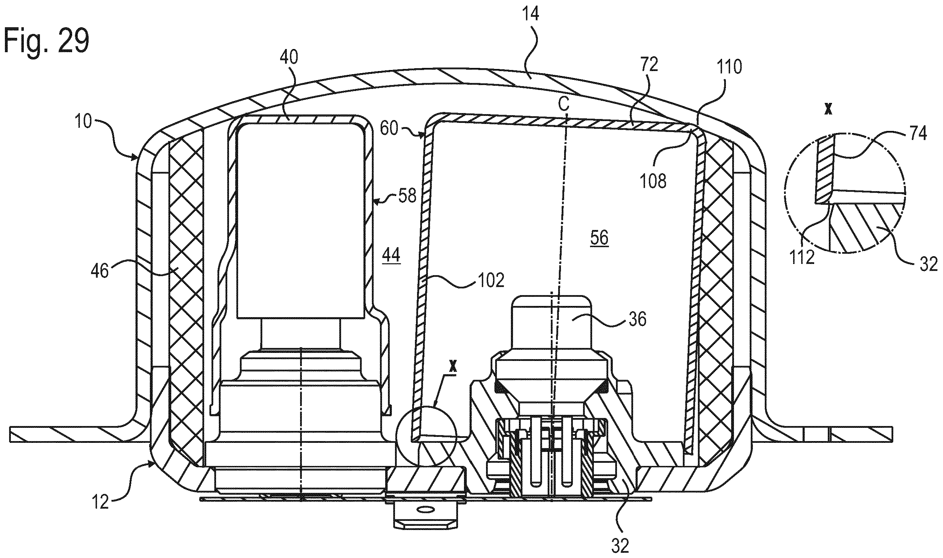

- Figur 29 eine seitliche Schnittansicht eines erfindungsgemäßen Gasgenerators nach der zweiten Bauform nach Aktivierung der zweiten Aktivierungsstufe;

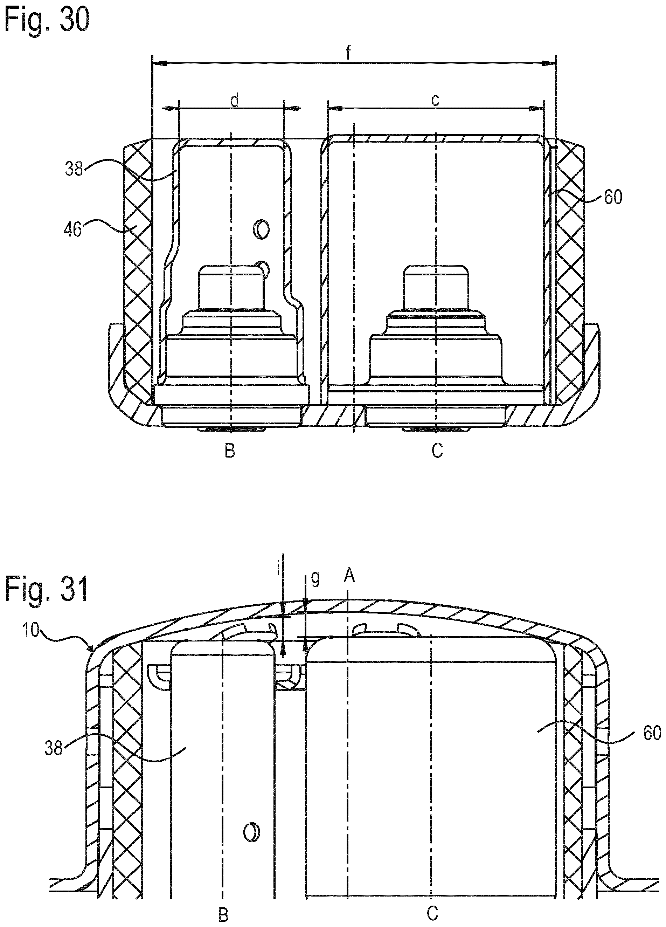

- Figur 30 eine seitliche Schnittansicht eines erfindungsgemäßen Gasgenerators ohne Diffusor und Füllkörper;
- Figur 31 einen Ausschnitt einer seitlichen Schnittansicht eines erfindungsgemäßen Gasgenerators;

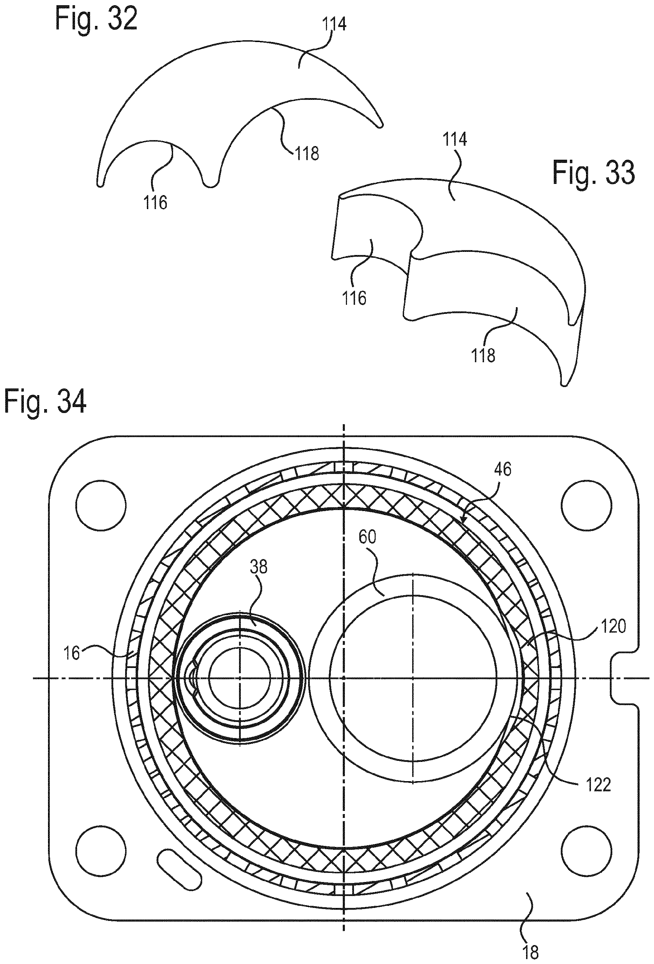

- Figur 32 eine Draufsicht auf ein Füllkörperteil für die erste Brennkammer eines erfindungsgemäßen Gasgenerators nach einer Ausführungsvariante;
- Figur 33 eine perspektivische Ansicht des Füllkörperteils aus Figur 32;
- Figur 34 eine in einem oberen Bereich des Gasgenerators geschnittene Draufsicht auf einen erfindungsgemäßen Gasgenerator;

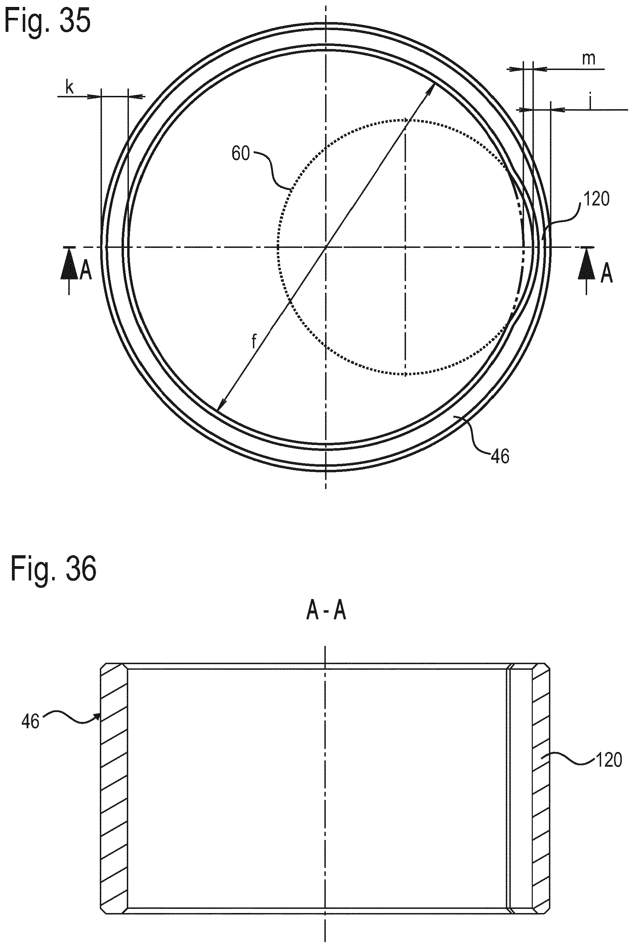

- Figur 35 eine Draufsicht auf einen Filter eines erfindungsgemäßen Gasgenerators;
- Figur 36 eine Schnittansicht des Filters entlang der Linie A-A in Figur 35; und

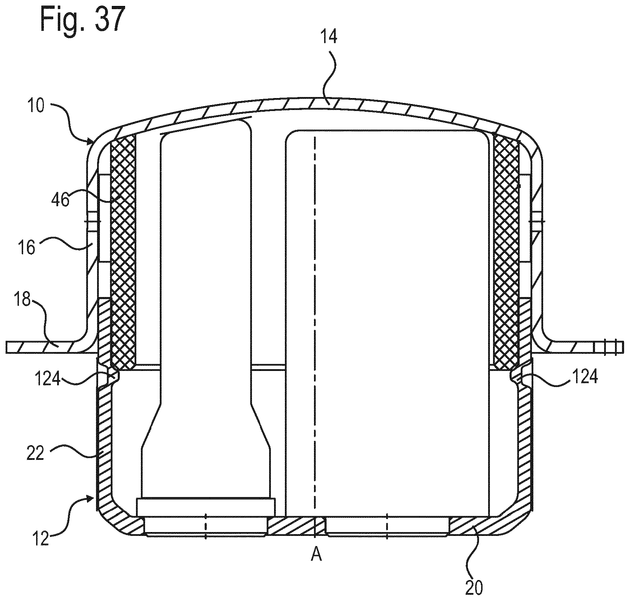

- Figur 37 eine schematische seitliche Schnittansicht eines erfindungsgemäßen Gasgenerators nach der ersten Bauform in einer Ausführungsvariante.

In der nachfolgenden detaillierten Beschreibung bevorzugten Ausführungsformen und -varianten der Erfindung werden zur Erleichterung des Verständnisses Angaben wie oben, unten, etc. verwendet. Diese Angaben beziehen sich auf eine Orientierung des Gasgenerators, wie er in den Figuren 1 und 2 dargestellt ist.

Es versteht sich, dass einzelne Merkmale oder Markmalsgruppen, die im Zusammenhang mit einer Bauform und/ oder einer Ausführungsvariante beschrieben sind, auch Gegenstand bzw. Element jeder anderen Bauform und/ oder Ausführungsvariante sein können, selbst wenn dies nachfolgend nicht nochmals ausdrücklich erwähnt ist. So können jede der beschriebenen Hülsenvarianten oder einzelne Merkmale dieser in jeder der Bauformen vorgesehen sein. Auch sind die Filter/ Diffusorgestaltungen, Ausströmöffnungsausgestaltungen wie auch die übrigen Merkmale beliebig untereinander kombinierbar.

In Figur 1 ist ein Gasgenerator, der Teil eines Gassackmoduls mit einem aufblasbaren Gassack ist, nach einer ersten Bauform dargestellt. Der Gasgenerator umfasst ein Außengehäuse, das sich aus einem topfförmigen Diffusor 10 und einem Verschlusskörper 12 zusammensetzt.

Der Diffusor 10 hat einen gewölbten Deckenabschnitt 14 und eine daran anschließende, im Wesentlichen zylindrische Umfangswand 16. Von der dem Deckenabschnitt 14 abgewandten Seite der Umfangswand 16 erstreckt sich ein Generatorflansch 18 radial nach außen. Der Generatorflansch 18 soll im Folgenden nicht als Bestandteil des Außengehäuses angesehen werden.

Der Verschlusskörper 12 hat einen im Wesentlichen ebenen Boden 20 und einen außen umlaufenden, hochgezogenen Rand 22, der an der Innenseite der Umfangswand 16 des Diffusors 10 anliegt. Die Wanddicke des Verschlusskörpers 12 ist wenigstens abschnittsweise größer als die des Diffusors 10. Insbesondere der Boden 20 des Verschlusskörpers 12 ist dicker als die Umfangswand 16 und der Deckenabschnitt 14 des Diffusors 10.

Das aus dem Diffusor 10 (ohne Generatorflansch 18) und dem Verschlusskörper 12 gebildete Außengehäuse ist bezüglich der Mittelachse A des Gasgenerators im Wesentlichen rotationssymmetrisch, wie es für sogenannte "disk-shape"-Gasgeneratoren, zu denen auch der Gegenstand der Erfindung zählt, üblich ist. Die Mittelachse A des Gasgenerators fällt somit mit der Mittelachse des Diffusors 10 und des Verschlussköpers 12 zusammen.

Der Verschlusskörper 12 hat zwei von der Mittelachse A des Gasgenerators unterschiedlich weit beabstandete Bodenöffnungen 24, die zur Aufnahme vormontierter Anzündereinheiten 26, 28 dienen. Beide Anzündereinheiten 26,28 umfassen einen Anzünderträger 30 bzw. 32 und einen in diesen eingesetzten Anzünder 34 bzw. 36.

Die erste (in Figur 1 linke) Anzündereinheit 26 ist einer ersten Aktivierungsstufe des Gasgenerators zugeordnet. Auf einen Aufnahmeabschnitt des ersten Anzünderträgers 30 ist eine einseitig offene Anzünderhülse 38 aufgesteckt, deren Boden 40 dem Deckenabschnitt 14 des Diffusors 10 gegenüberliegt. Zwischen Anzünderhülse 38 und erstem Anzünderträger 30 besteht eine Presspassung, sodass keine weitere Befestigungsmaßnahme (Schweißen, etc.) notwendig ist. Die Anzünderhülse 38 umgibt eine Anzünderkammer 42, in die der erste Anzünder 34 hineinragt. Die Anzünderkammer 42 ist mit einer Verstärkerladung (nicht gezeigt), insbesondere in Tablettenform, gefüllt.

Die Anzünderhülse 38 ist vollständig von einer ersten Brennkammer 44 umgeben, die mit einem Treibstoff (nicht gezeigt), insbesondere in Tablettenform, gefüllt ist. Wie in Figur 1 zu erkennen ist, verjüngt sich der Durchmesser der Anzünderhülse 38 zu ihrem Boden 40 hin stufenweise. Die Verjüngung lässt im Vergleich zu einer Anzünderhülse mit konstantem Durchmesser mehr Raum für Treibstoff in der ersten Brennkammer 44.

Die erste Brennkammer 44 ist axial durch den Deckenabschnitt 14 des Diffusors 10 und den Boden 20 des Verschlusskörpers 12 begrenzt. Radial ist die erste Brennkammer 44 durch einen vollständig umlaufenden, ringförmigen Filter 46 begrenzt, der entlang der Innenseite des hochgezogenen Rands 22 des Verschlusskörpers 12 bzw. entlang der Innenseite der Umfangswand 16 des Diffusors 10 verläuft, wobei zwischen dem Filter 46 und der Umfangswand 16 ein Ringspalt 48 gebildet ist.

Unterhalb des Filters 46 ist die erste Brennkammer 44 in radialer Richtung durch ein Stützelement 50 begrenzt, auf dem sich der Filter 46 axial abstützt. Im Falle eines nicht vollständig umlaufend ausgebildeten Stützelements 50 ist die erste Brennkammer 44 in den dazwischenliegenden Bereichen durch den Rand 22 des Verschlusskörpers 12 begrenzt. Dadurch, dass sich der Filter 46 nicht bis zum Boden 20 des Verschlusskörpers 12 erstreckt, können Kosten für zusätzliches Filtermaterial und Gewicht eingespart werden.

Zwischen dem Treibstoff der ersten Brennkammer 44 und dem Deckenabschnitt 14 des Diffusors 10 ist ein erster Füllkörper 52 angeordnet. Gemäß der in Figur 1 dargestellten ersten Ausführungsvariante ist der erste Füllkörper 52 aus Streckmetall gebildet (Maschengestrick) und weist elastische, fingerförmige Abschnitte 54 auf, die sich zum Deckenabschnitt 14 des Diffusors 10 hin abstützen.

Der zweite (in Figur 1 rechte) Anzünder 36 ragt in eine zweite Brennkammer 56, die wenigstens teilweise von der ersten Brennkammer 44 umgeben ist. Die zweite Brennkammer 56 ist im Wesentlichen durch einen Treibstoffkanister 58 aus Aluminium, Kupfer, Kunststoff oder Stahl und eine den Treibstoffkanister 58 umgebende Brennkammerhülse 60 aus Stahl begrenzt.

Der Treibstoffkanister 58 hat eine im Wesentlichen zylindrische Seitenwand 62. Auf einer dem Deckenabschnitt 14 des Diffusors 10 zugewandten axialen Stirnseite weist der Treibstoffkanister 58 eine Treibstoffkanisteröffnung 64 auf; im dargestellten Ausführungsbeispiel ist diese Stirnseite vollständig offen. Auf der entgegengesetzten Stirnseite weist der Treibstoffkanister 58 einen Treibstoffkanisterboden 66 mit einer zentralen Treibstoffkanisterbodenöffnung 68 auf. Die Treibstoffkanisterbodenöffnung 68 ist durch einen umgebogenen inneren Randabschnitt 70 gebildet, der sich vom Treibstoffkanisterboden 66 in das Innere des Treibstoffkanisters 58 erstreckt. Der Treibstoffkanisterboden 66 mit dem umgebogenen inneren Randabschnitt 70 stützt sich an einem oberen Aufnahmeabschnitt des zweiten Anzünderträgers 32 ab. Zwischen Treibstoffkanister 58 und zweitem Anzünderträger 32 besteht eine Presspassung, sodass keine weitere Befestigungsmaßnahme (Schweißen, etc.) notwendig ist.

Auf den Treibstoffkanister 58 ist die Brennkammerhülse 60 in umgekehrter Orientierung so aufgeschoben, dass ein Brennkammerhülsenboden 72, der dem Deckenabschnitt 14 des Diffusors 10 gegenüberliegt, die offene Seite des Treibstoffkanisters 58 vollständig verschließt. Der freie Rand 74 auf der offenen Seite der Brennkammerhülse 60 ist auf einen unteren Aufnahmeabschnitt des zweiten Anzünderträgers 32 aufgesteckt. Zwischen Brennkammerhülse 60 und zweitem Anzünderträger 32 besteht eine Presspassung, sodass keine weitere Befestigungsmaßnahme (Schweißen, etc.) notwendig ist.

Am Brennkammerhülsenboden 72 ist ein fest mit diesem verbundener zweiter Füllkörper 76 angeordnet, der in den Treibstoffkanister 58 hineinragt. Ansonsten ist die zweite Brennkammer 56 mit Treibstoff (nicht gezeigt), insbesondere in Tablettenform, gefüllt.

Nachfolgend wird die grundlegende Funktionsweise des Gasgenerators beschrieben. Besonderheiten der Funktionsweise werden später detailliert erläutert.

Wie bereits erwähnt, ist der Gasgenerator zweistufig konzipiert. Bei Aktivierung der ersten Stufe zündet der erste Anzünder 34 die Verstärkerladung in der Anzünderkammer 42. Während des Abbrands der Verstärkerladung treten "Anzündstrahlen" (Heißgas) aus Überströmöffnungen der Anzünderhülse 38 (in Figur 1 nicht zu sehen), auf die später noch genauer eingegangen wird, in die erste Brennkammer 44 ein und entzünden den darin befindlichen Treibstoff. Das beim Abbrand entstehende Gas strömt durch den Filter 46, der das Gas kühlt und von Partikeln befreit, und anschließend durch Ausströmöffnungen 78 des Diffusors 10, auf die später ebenfalls noch genauer eingegangen wird, in den Gassack.

Bei einer Aktivierung der zweiten Stufe, die in Abhängigkeit von der erkannten Unfallsituation und der Aktivierungssteuerung grundsätzlich nach, vor oder unabhängig von der ersten Stufe erfolgen kann, zündet der zweite Anzünder 36 den Treibstoff in der zweiten Brennkammer 56. Das beim Abbrand des Treibstoffs entstehende Gas kann durch einen besonderen Mechanismus, der später noch genauer erläutert wird, aus der zweiten Brennkammer 56 in die erste Brennkammer 44 entweichen. Von dort gelangt das Gas durch den Filter 46 und die Ausströmöffnungen 78 in den Gassack.

Der in Figur 1 gezeigte Aufbau des Gasgenerators (erste, "hohe" Bauform) ermöglicht das Aufblasen eines Gassacks mit einem Volumen von 60 bis zu 135 Liter und ist somit insbesondere für Beifahrer-Gassackmodule geeignet.

Die Bauhöhe des Gasgenerators, insbesondere die axiale Höhe h1 des Außengehäuses, liegt bei der ersten Bauform zwischen 50 und 70 mm und beträgt beim dargestellten Ausführungsbeispiel gemäß Figur 1 etwa 60 mm.

Bei der ersten Bauform des Gasgenerators liegt das Verhältnis des Volumens der ersten Brennkammer 44 zum Volumen der zweiten Brennkammer 56 zwischen 2,34 und 3,27, vorzugsweise zwischen 2,54 und 3,00. Beim dargestellten Ausführungsbeispiel gemäß Figur 1 beträgt dieses Verhältnis etwa 2,76.

Bei der ersten Bauform des Gasgenerators liegt das Verhältnis des Volumens der ersten Brennkammer 44 zum Volumen der Anzünderhülse 38 zwischen 13,5 und 31,0, vorzugsweise zwischen 16,0 und 24,0. Beim dargestellten Ausführungsbeispiel gemäß Figur 1 beträgt dieses Verhältnis etwa 19,3.

Bei der ersten Bauform des Gasgenerators liegt das Verhältnis des Außendurchmessers a des Außengehäuses des Gasgenerators (ohne Generatorflansch 18, siehe Figur 5) zur Höhe h1 des Außengehäuses zwischen 0,94 und 1,16 und beträgt beim dargestellten Ausführungsbeispiel gemäß Figur 1 etwa 1,05.

In Figur 2 ist eine zweite Bauform des Gasgenerators gezeigt, die im Vergleich zur ersten Bauform eine deutlich niedrigere Bauhöhe hat und dementsprechend auch als "flache" Bauform bezeichnet wird. Der Aufbau des Gasgenerators ist bei beiden Bauformen im Wesentlichen gleich mit einigen Ausnahmen. Auf die wichtigsten Unterschiede wird nachfolgend eingegangen.

Im Vergleich zur ersten Bauform sind bei der zweiten Bauform die axialen Ausdehnungen des Verschlusskörpers 12, der Anzünderhülse 38, des Treibstoffkanisters 58, der Brennkammerhülse 66, der Anzünderkammer 42 sowie der beiden Brennkammern 44, 56 reduziert.

Bei der zweiten Bauform erstreckt sich der Filter 46 vom Deckenabschnitt 14 des Diffusors 10 bis zum Bodenbereich des Verschlusskörpers 12. An seinem unteren Ende stützt sich der Filter 46 axial an einem schrägen Übergangsbereich 80 des Verschlusskörpers 12 ab, weshalb ein separates Stützelement für den Filter 46 wie bei der ersten Bauform hier nicht vorgesehen ist.

Anstelle des ersten Füllkörpers 52 aus Streckmetall mit den elastischen fingerförmigen Abschnitten 54 ist gemäß einer zweiten Ausführungsvariante ein flacher erster Füllkörper 82 aus nachgiebigem Silikon vorgesehen. Die in Figur 2 gezeigte Ausführungsvariante des ersten Füllkörpers 82 kann aber auch bei der ersten Bauform eingesetzt werden. Auf die zweite Ausführungsvariante des ersten Füllkörpers 82 wird später noch genauer eingegangen.

Der in Figur 2 gezeigte Aufbau des Gasgenerators (zweite, "flache" Bauform) ermöglicht das Aufblasen eines Gassacks mit einem Volumen von 40 bis zu 60 Liter und ist somit insbesondere für Fahrer-Gassackmodule geeignet.

Die Bauhöhe des Gasgenerators, insbesondere die axiale Höhe h2 des Außengehäuses, liegt bei der zweiten Bauform zwischen 30 und 50 mm und beträgt beim dargestellten Ausführungsbeispiel gemäß Figur 2 etwa 40 mm.

Bei der zweiten Bauform des Gasgenerators liegt das Verhältnis des Volumens der ersten Brennkammer 44 zum Volumen der zweiten Brennkammer 56 zwischen 2,07 und 3,78, vorzugsweise zwischen 2,41 und 3,21. Beim dargestellten Ausführungsbeispiel gemäß Figur 2 beträgt dieses Verhältnis etwa 2,82.

Bei der zweiten Bauform des Gasgenerators liegt das Verhältnis des Volumens der ersten Brennkammer 44 zum Volumen der Anzünderhülse 38 zwischen 9,00 und 35,0, vorzugsweise zwischen 11,6 und 22,0. Beim dargestellten Ausführungsbeispiel gemäß Figur 2 beträgt dieses Verhältnis etwa 15,5.

Bei der zweiten Bauform des Gasgenerators liegt das Verhältnis des Außendurchmessers a des Außengehäuses des Gasgenerators zur Höhe h2 des Außengehäuses zwischen 1,38 und 1,78 und beträgt beim dargestellten Ausführungsbeispiel gemäß Figur 2 etwa 1,57.

Nachfolgend werden verschiedene Besonderheiten des in den Figuren 1 und 2 gezeigten Gasgenerators beschrieben.

Die Figuren 3 und 4 zeigen den Diffusor 10 des Gasgenerators, der mit Ausnahme des Generatorflanschs 18 im Wesentlichen rotationssymmetrisch geformt ist. In der Umfangswand 16, die im Wesentlichen parallel zur Mittelachse A verläuft, ist eine Vielzahl von Ausströmöffnungen 78 vorgesehen. Die Ausströmöffnungen 78 sind alle in einer Reihe angeordnet, die auf gleichbleibender Höhe in Umfangsrichtung verläuft. Genauer gesagt haben die Mittelpunkte der Ausströmöffnungen 78 alle den gleichen axialen Abstand vom sich radial erstreckenden Generatorflansch 18.

In der Reihe sind mehr als zwölf, vorzugsweise mehr als vierzehn Ausströmöffnungen 78 vorgesehen. Beim dargestellten Ausführungsbeispiel ist es eine ungerade Anzahl: genau dreiundzwanzig Ausströmöffnungen 78 sind in der Reihe angeordnet. Allgemein ist das Verhältnis des Außenumfangs des Diffusors 10 in Millimetern zu der Anzahl n der Ausströmöffnungen in der Reihe kleiner als 16,5, vorzugsweise kleiner als 14,1, weiter vorzugsweise kleiner als 9,85. Das Verhältnis liegt weiter vorzugsweise zwischen 7,57 und 9,85, weiter vorzugsweise zwischen 8,20 und 8,96. Beim dargestellten Ausführungsbeispiel beträgt dieses Verhältnis etwa 8,56.

Wie in Figur 4 angedeutet ist, sind die Ausströmöffnungen 78 auf der Innenseite des Diffusors 10 durch eine Verdämmung in Form eines umlaufenden Verdämmbandes 84 abgedeckt. Die Dimensionen des Verdämmbandes 84 sind so gewählt, dass es in den Ringspalt 48 zwischen der Umfangswand 16 des Diffusors 10 und dem umlaufenden Filter 46 passt (siehe Figuren 1 und 2).

Die Reihe der Ausströmöffnungen 78 läuft nicht vollständig um. Im Uhrzeigersinn betrachtet markiert die mit 78a bezeichnete Ausströmöffnung den Anfang und die mit 78b bezeichnete Ausströmöffnung das Ende der Reihe. Innerhalb der Reihe sind die Abstände zwischen benachbarten Ausströmöffnungen 78 (bezogen auf deren Mittelpunkte) gleich. Der Abstand zwischen der ersten Ausströmöffnung 78a und der letzten Ausströmöffnung 78b ist dagegen doppelt so groß. Da die Anzahl n der Ausströmöffnungen 78 in der Reihe ungerade ist, entsteht somit eine Anordnung der Ausströmöffnungen 78, bei der - bezogen auf die Mittelachse A - jeder Ausströmöffnung 78 eine andere Ausströmöffnung gegenüberliegt, mit einer Ausnahme: Der mit 78c bezeichneten Ausströmöffnung liegt der Bereich zwischen der ersten Ausströmöffnung 78a und der letzten Ausströmöffnung 78b und damit keine Ausströmöffnung gegenüber. In diesem Bereich der Diffusorinnenseite ist ein Stoß des Verdämmbandes 84 angeordnet. Eine Ausströmöffnung würde hier die Dichtheit zum Außenbereich des Gasgenerators hin beeinträchtigen.

Allgemein beträgt der Winkelabstand zwischen benachbarten Ausströmöffnungen 78 bei einer solchen Konstellation (unabhängig davon, ob die Anzahl n der Ausströmöffnungen gerade oder ungerade ist) 360° / (n + 1).

Die vorzugsweise kreisförmigen Ausströmöffnungen 78 haben wenigstens zwei unterschiedliche Strömungsquerschnitte; beim dargestellten Ausführungsbeispiel sind es insgesamt drei unterschiedliche Strömungsquerschnitte. Die Ausströmöffnungen 78 sind deshalb in Figur 3 mit dem Zusatz (1), (2) oder (3) versehen, um den zugehörigen Strömungsquerschnitt zu kennzeichnen. Die unterschiedlichen Strömungsquerschnitte (1), (2) und (3) sind durch unterschiedliche Durchmesser der Ausströmöffnungen 78 bestimmt.

Die Strömungsquerschnitte (1), (2) und (3) der Ausströmöffnungen 78 sind so gewählt, dass gegenüberliegende Ausströmöffnungen 78 den gleichen Strömungsquerschnitt haben. Dagegen weisen benachbarte Ausströmöffnungen 78 innerhalb der Reihe unterschiedliche Strömungsquerschnitte auf. Beim dargestellten Ausführungsbeispiel wiederholt sich in der Reihe folgende Abfolge der Strömungsquerschnitte: kleiner Strömungsquerschnitt (1) → mittlerer Strömungsquerschnitt (2) → kleiner Strömungsquerschnitt (1) → großer Strömungsquerschnitt (3).

Das Verhältnis des Außenumfangs des Diffusors 10 (ohne Generatorflansch 18) in mm zur Anzahl der Ausströmöffnungen 78 mit kleinem Strömungsquerschnitt (1) ist kleiner als 19,7 und liegt vorzugsweise zwischen 15,1 und 19,7. Beim dargestellten Ausführungsbeispiel beträgt dieses Verhältnis etwa 17,9.

Das Verhältnis des Außenumfangs des Diffusors 10 in mm zur Anzahl der Ausströmöffnungen 78 mit mittlerem Strömungsquerschnitt (2) sowie zur Anzahl der Ausströmöffnungen 78 mit großem Strömungsquerschnitt (3) ist kleiner als 39,4 und liegt vorzugsweise zwischen 28,2 und 39,4. Beim dargestellten Ausführungsbeispiel beträgt dieses Verhältnis etwa 32,8.

Das Verhältnis des Gesamtströmungsquerschnitts aller Ausströmöffnungen 78 in der Reihe in mm² zum Außenumfang des Diffusors 10 in mm ist größer als 110 und liegt vorzugsweise zwischen 110 und 139. Beim dargestellten Ausführungsbeispiel beträgt dieses Verhältnis etwa 124.

Aus der in Figur 5 dargestellten Draufsicht auf den Diffusor 10 des Gasgenerators geht hervor, dass der sich von der Umfangswand 16 des Diffusors 10 radial nach außen erstreckende Generatorflansch 18 eine im Wesentlichen rechteckige Form hat. Die Mittelachse A des rotationssymmetrischen Außengehäuses mit kreisförmigem Querschnitt verläuft durch den Mittelpunkt M des Generatorflanschs 18.

Das Verhältnis der Länge I zur Breite b des Rechtecks, welches der Generatorflansch 18 beschreibt, liegt zwischen 1,12 und 1,31, vorzugsweise zwischen 1,16 und 1,27. Beim dargestellten Ausführungsbeispiel beträgt dieses Verhältnis etwa 1,21.

Das Verhältnis der Länge I des Rechtecks zum Außendurchmesser a des Außengehäuses (ohne Generatorflansch 18) liegt zwischen 1,24 und 1,48, vorzugsweise zwischen 1,30 und 1,42. Beim dargestellten Ausführungsbeispiel beträgt dieses Verhältnis etwa 1,36.

Das Verhältnis der Breite b des Rechtecks zum Außendurchmesser a des Außengehäuses liegt zwischen 1,01 und 1,23, vorzugsweise zwischen 1,06 und 1,17. Beim dargestellten Ausführungsbeispiel beträgt dieses Verhältnis etwa 1,12.

In den Figuren 6 bis 9 sind verschiedene Schritte des Zusammenbaus einer der Anzündereinheiten 26, 28 gezeigt, bevor diese als vormontierte Einheit in eine der Bodenöffnungen 24 des Verschlusskörpers 12 eingesetzt wird. In den in Figur 6 gezeigten Anzünderträger 30 bzw. 32 wird zunächst ein Dichtring 86 in eine Anzünderaufnahme eingelegt (siehe Figur 7), bevor der Anzünder 34 bzw. 36 in die Anzünderaufnahme des Anzünderträgers 30 bzw. 32 eingesetzt wird (siehe Figur 8). Danach wird der abstehende umlaufende Rand 88 der Anzünderaufnahme so umgebördelt, dass der Anzünder 34 bzw. 36 im Anzünderträger 30 bzw. 32 sicher gehalten ist (siehe Figur 9).

Der Anzünderträger 30 bzw. 32 weist an einer bestimmten Stelle eine Einfräsung als Markierung 90 auf. Die Markierung 90 gibt eine Orientierung der Anzündereinheit 26 bzw. 28 vor. Ein beim Zusammenbau des Gasgenerators verwendetes Montagewerkzeug ist so ausgebildet, dass es die Anzündereinheit 26 bzw. 28 nur in einer vorbestimmten Orientierung aufnehmen kann. Beim Einbau der Anzündereinheit 26 bzw. 28 wird diese mithilfe des entsprechend eingerichteten Werkzeugs in der gewünschten Orientierung eingebaut (siehe Figuren 10 bis 12).

In den Figuren 13 bis 26 sind verschiedene Ausführungsvarianten der Anzünderhülse 38 gezeigt, die in einer vorbestimmten Orientierung auf dem ersten Anzünderträger 30 angeordnet ist. Hierfür weist die Anzünderhülse 38 eine von ihrer Mittelachse B entfernte oder sich unsymmetrisch von der Mittelachse B erstreckende Markierung 92 auf. Mithilfe der Markierung 92 ist es möglich, die korrekte Orientierung der Anzünderhülse 38 beim Aufsetzen auf die erste Anzündereinheit 26 sicherzustellen.

Bei der in den Figuren 13 bis 15 gezeigten Ausführungsvariante der Anzünderhülse 38 ist die Markierung 92 als Nase ausgebildet, die sich von einem verjüngten Abschnitt 94 der Seitenwand 96 der Anzünderhülse 38 radial nach außen erstreckt. Ähnlich wie bei der mit der Markierung 90 versehenen Anzündereinheit 26 bzw. 28 hat ein beim Zusammenbau des Gasgenerators verwendetes Montagewerkzeug eine der Nase entsprechende Ausnehmung, sodass die Anzünderhülse 38 nur in einer vorbestimmten Orientierung im Montagewerkzeug aufgenommen werden kann. Das Montagewerkzeug ist so eingerichtet, dass die Anzünderhülse 38 beim Einbau dann in der in Figur 27 gezeigten Orientierung auf den ersten Anzünderträger 30 aufgesteckt wird.

In Figur 16 ist eine andere Ausführungsvariante der Anzünderhülse 38 gezeigt. Der Boden 40 der Anzünderhülse 38 ist hier gegenüber einer zur Mittelachse B der Anzünderhülse 38 senkrechten Ebene in einem bestimmten Winkel geneigt. Die Schräge des Anzünderhülsenbodens 40 ist so auf die axiale Wölbung des Deckenabschnitts 14 des Diffusors 10 abgestimmt, dass die Anzünderhülse 38 nur in der vorbestimmten Orientierung unter den Deckenabschnitt 14 des Diffusors 10 passt.

Weitere alternative Ausführungsvarianten der Anzünderhülse 38 mit besonderen Markierungen 92 sind in den Figuren 17 und 18, 19 bis 22 sowie 23 bis 26 gezeigt.

Bei Aktivierung der ersten Stufe des Gasgenerators wird die Anzünderhülse 38 durch den beim Abbrand der Verstärkerladung entstehenden Druck nach oben, d.h. in Richtung des Deckenabschnitts 14 des Diffusors 10 bewegt. Die maximale Bewegung der Anzünderhülse 38 ist durch den Deckenabschnitt 14 des Diffusors 10 begrenzt, der seinerseits eine Verformung erfährt (Ausbauchen). Im Gegensatz zur Brennkammerhülse 60 (wie später noch erläutert wird) löst sich die Anzünderhülse 38 nicht vom Aufnahmeabschnitt des ersten Anzünderträgers 30, d. h. es entsteht durch das Anheben der Anzünderhülse 38 keine zusätzliche Austrittsöffnung, die aus der Anzünderkammer 42 herausführt.

Allen Ausführungsvarianten der Anzünderhülse 38 ist gemeinsam, dass sie - bezogen auf die Mittelachse B der Anzünderhülse 38 - in Umfangsrichtung ungleichmäßig verteilte Überströmöffnungen 98 aufweisen. Genauer gesagt sind die Überströmöffnungen 98 auf einen bestimmten Bereich der Seitenwand 96 der Anzünderhülse 38 beschränkt. Wenn die Anzünderhülse 38 in der vorbestimmten Orientierung auf den ersten Anzünderträger 30 aufgesteckt ist, sind die Überströmöffnungen 98 nicht direkt auf den Filter 46 gerichtet. Die Mittelachsen der äußeren Überströmöffnungen 98 in dem bestimmten Bereich der Seitenwand 96 definieren nämlich in Umfangsrichtung einen begrenzten Winkelbereich α für den Austritt des Heißgases (Anzündstrahlen) beim Abbrennen der Verstärkerladung in der Anzünderkammer 42 (siehe Figur 15).

Wie in Figur 27 angedeutet ist, erstreckt sich der Winkelbereich α zu beiden Seiten einer Verbindungslinie zwischen der Mittelachse B der Anzünderhülse 38 und dem von der Mittelachse B maximal entfernten Abschnitt des Filters 46. Insbesondere schließt der Winkelbereich α diejenigen Bereiche der mit Treibstoff gefüllten ersten Brennkammer 44 ein, in denen der nicht durch Bauteile des Gasgenerators blockierte Abstand zum Filter 46 maximal ist. Der Winkelbereich α ist stumpf und liegt zwischen 90° und 135°, vorzugsweise zwischen 100° und 120°. Beim dargestellten Ausführungsbeispiel gemäß Figur 27 beträgt der Winkelbereich α etwa 110°.

Wie ebenfalls aus Figur 27 ersichtlich ist, umschließt der Winkelbereich α auch die Brennkammerhülse 60. Die Überströmöffnungen 98 sind aber so angeordnet, dass die austretenden Anzündstrahlen nicht direkt auf die Brennkammerhülse 60 gerichtet sind, sondern vornehmlich auf Bereiche, in denen auf einer möglichst großen Länge möglichst viel Treibstoff erfasst wird.

Aus Figur 28 ist der besondere Aufbau der zweiten Brennkammer 56 ersichtlich. Der Boden 66 des Treibstoffkanisters 58 liegt auf einer im Wesentlichen horizontalen Fläche des zweiten Anzünderträgers 32 auf, und der umgebogene Randabschnitt 70 des Treibstoffkanisterbodens 66 stützt sich an einer umlaufenden Außenfläche des zweiten Anzünderträgers 32 ab. Der Treibstoffkanister 58 steht dadurch stabil und kann bequem mit Treibstoff befüllt werden.

Nach dem Befüllen wird die Brennkammerhülse 60 mit dem zweiten Füllkörper 76 in entgegengesetzter Orientierung (im Vergleich zum Treibstoffkanister 58) auf den Treibstoffkanister 58 aufgeschoben. Gemäß dem dargestellten Ausführungsbeispiel wird die Brennkammerhülse 60, die eine geringfügig größere axiale Höhe als der Treibstoffkanister 58 aufweist, so weit aufgeschoben, bis der freie Rand 74 der offenen Seite der Brennkammerhülse 60 vom unteren Aufnahmeabschnitt des zweiten Anzünderträgers 32 gehalten wird und die Treibstoffkanisteröffnung 64 (hier: die offene Seite) vollständig durch den Brennkammerhülsenboden 72 abgedeckt ist. Die im Wesentlichen zylindrischen Seitenwände 62, 102 des Treibstoffkanisters 58 und der Brennkammerhülse 60 liegen einander dann unmittelbar gegenüber, genauer gesagt überdeckt die innere Mantelfläche der Brennkammerhülsenseitenwand 102 die äußere Mantelfläche der Treibstoffkanisterseitenwand 62 im Wesentlichen über die gesamte axiale Länge der beiden Hülsen 58, 60.

In der Nähe der Treibstoffkanisteröffnung 64, etwa auf Höhe des in den Treibstoffkanister 58 ragenden zweiten Füllkörpers 76, ist in der Seitenwand 62 des Treibstoffkanisters 58 eine vorzugsweise vollständig umlaufende Sicke 104 eingeprägt. Die Sicke 104 dient zur Versteifung des Treibstoffkanisters 58, insbesondere im oberen Bereich nahe der Treibstoffkanisteröffnung 64.

Im Treibstoffkanisterboden 66 sind mehrere Treibstoffkanisterbodenlöcher 106 gebildet. Die Seitenwand 62 des Treibstoffkanisters 58 hingegen weist keine Öffnungen oder Löcher auf. Die auf den Treibstoffkanister 58 aufgeschobene Brennkammerhülse 60 ist, abgesehen von ihrer offenen Seite, vollständig lochfrei.

Vor der Aktivierung der zweiten Stufe des Gasgenerators ist die zweite Brennkammer 56 vollständig geschlossen. Im Falle einer Aktivierung der zweiten Stufe brennt der Treibstoff in der zweiten Brennkammer 56 ab, und das dabei entstehende Abbrandgas erzeugt in der zweiten Brennkammer 56 einen Überdruck. Durch den Überdruck wird die Brennkammerhülse 60 in Richtung des Deckenabschnitts 14 des Diffusors 10 gedrückt.

Ein von der Mittelachse A des Gasgenerators entfernter Randbereich 108 des Brennkammerhülsenbodens 72 berührt entweder bereits im nicht aktivierten Zustand des Gasgenerators oder nach einer geringfügigen Verschiebung der Brennkammerhülse 60 nach oben den Deckenabschnitt 14 des Diffusors 10. In jedem Fall begrenzt der Deckenabschnitt 14, der infolge der Gasentwicklung selbst ausbaucht, die axiale Bewegung der Brennkammerhülse 60.

Da sich die Brennkammerhülse 60 am Randbereich des Deckenabschnitts 14 abstützt, kippt die Brennkammerhülse 60 aufgrund des weiterhin vorhandenen Drucks in der zweiten Brennkammer 56 um die Kontaktstelle 110, wie in Figur 29 gezeigt ist. Es ist auch möglich, dass sich die Brennkammerhülse 60 zusätzlich oder alternativ zum Kippen ungleichmäßig verformt. In jedem Fall hebt sich ein vom äußeren Rand des Gasgenerators abgewandter Abschnitt der Seitenwand 102 der Brennkammerhülse 60 vom zweiten Anzünderträger 32 ab und gibt einen Austrittspalt 112 frei, der insbesondere in der Detailvergrößerung X der Figur 29 zu erkennen ist.

Das beim Abbrand des Treibstoffs in der zweiten Brennkammer 56 entstehende Gas gelangt durch die Löcher 106 im Treibstoffkanisterboden 66 zum Austrittspalt 112 und durch diesen aus der zweiten Brennkammer 56 in die erste Brennkammer 44 hinein. Gemäß einer anderen Ausführungsvariante des Treibstoffkanisters 58 weist dieser anfangs keine Treibstoffkanisterbodenlöcher 106 auf; die Löcher werden erst durch den beim Abbrand des Treibstoffs entstehenden Druck und ein dadurch bedingtes Aufreißen des Treibstoffkanisterbodens 66 gebildet.

Der Abstand zwischen der Mittelachse B der Anzünderhülse 38 und der Mittelachse C der Brennkammerhülse 60, die in Figur 30 im eingebauten Zustand dargestellt sind, liegt zwischen 22,5 und 27,5 mm, vorzugsweise zwischen 23,5 und 26,5 mm. Beim dargestellten Ausführungsbeispiel beträgt dieser Abstand etwa 25 mm.

Das Verhältnis des minimalen Innendurchmessers c der Brennkammerhülse 60 zum minimalen Innendurchmesser d der Anzünderhülse 38 liegt zwischen 1,64 und 2,63, vorzugsweise zwischen 1,83 und 2,32. Beim dargestellten Ausführungsbeispiel beträgt dieses Verhältnis etwa 2,06.

Die erste Brennkammer 44 des Gasgenerators ist, wie bereits erwähnt, radial zumindest teilweise durch den umlaufenden Filter 46 begrenzt. Das Verhältnis des Innendurchmessers f des Filters 46 zum minimalen Innendurchmesser d der Anzünderhülse 38 liegt zwischen 3,19 und 4,76, vorzugsweise zwischen 3,50 und 4,27. Beim dargestellten Ausführungsbeispiel beträgt dieses Verhältnis etwa 3,85.

Das Verhältnis des Innendurchmessers f des Filters 46 zum minimalen Innendurchmesser c der Brennkammerhülse 60 liegt zwischen 1,66 und 2,11, vorzugsweise zwischen 1,76 und 1,99. Beim dargestellten Ausführungsbeispiel beträgt dieses Verhältnis etwa 1,87.

Das Verhältnis des Außendurchmessers a des Gasgenerators, genauer gesagt des Außengehäuses (ohne Berücksichtigung des Generatorflanschs 18), zum minimalen Innendurchmesser d der Anzünderhülse 38 liegt zwischen 4,09 und 5,98, vorzugsweise zwischen 4,46 und 5,39. Beim dargestellten Ausführungsbeispiel beträgt dieses Verhältnis vorzugsweise etwa 4,89.

Das Verhältnis des Außendurchmessers a des Gasgenerators zum minimalen Innendurchmesser c der Brennkammerhülse 60 liegt zwischen 2,13 und 2,66, vorzugsweise zwischen 2,24 und 2,5. Beim dargestellten Ausführungsbeispiel beträgt dieses Verhältnis etwa 2,38.

Wie ebenfalls aus Figur 30 hervorgeht, ist die axiale Höhe des Kontaktbereichs zwischen der Anzünderhülse 38 und dem ersten Anzünderträger 30 größer als die axiale Höhe des Kontaktbereichs zwischen der Brennkammerhülse und dem zweiten Anzünderträger 32.

In Figur 31 ist die Anordnung der Anzünderhülse 38 und der Brennkammerhülse 60 relativ zum Deckenabschnitt 14 des Diffusors 10 gezeigt. Bezogen auf die Mittelachse A des Diffusors 10 variiert sowohl der axiale Abstand g zwischen der Brennkammerhülse 60 und dem Deckenabschnitt 14 als auch der axiale Abstand i zwischen der Anzünderhülse 38 und dem Deckenabschnitt 38. Im dargestellten Ausführungsbeispiel berührt die Brennkammerhülse 60 den Deckenabschnitt 14 des Diffusors 10 bereits im nicht aktivierten Zustand des Gasgenerators an der Kontaktstelle 110 im äußeren Randbereich des Gasgenerators.

Der axiale Abstand g zwischen der Brennkammerhülse 60 und dem Deckenabschnitt 14 des Diffusors 10 ist an der Mittelachse A des Diffusors 10 am größten und verringert sich mit zunehmendem radialem Abstand von der Mittelachse A stetig. Der maximale Abstand g liegt zwischen 2,3 und 3,7 mm, vorzugsweise zwischen 2,7 und 3,3 mm. Beim dargestellten Ausführungsbeispiel beträgt dieser maximale Abstand g etwa 3,0 mm.

Auch der axiale Abstand i der neben der Mittelachse A des Diffusors 10 angeordneten Anzünderhülse 38 ist nicht konstant, sondern verringert sich mit zunehmendem radialem Abstand von der Mittelachse A des Diffusors 10 stetig. Der maximale Abstand i zwischen der Anzünderhülse 38 und dem Deckenabschnitt 14 des Diffusors 10 liegt zwischen 2,1 und 3,5 mm, vorzugsweise zwischen 2,5 und 3,1 mm. Beim dargestellten Ausführungsbeispiel beträgt dieser maximale Abstand i etwa 2,8 mm.

In den Figuren 32 und 33 ist jeweils ein Teil 114 des zweiteilig ausgeführten ersten Füllkörpers 82 der zweiten Ausführungsvariante gezeigt, der in der ersten Brennkammer 44 zwischen dem Treibstoff und dem Deckenabschnitt 14 des Diffusors 10 angeordnet ist und sowohl bei der hohen ersten Bauform (siehe Figur 1) als auch bei der flachen zweiten Bauform (siehe Figur 2) eingesetzt werden kann. Der aus Silikon bestehende erste Füllkörper 82 kann aber auch einteilig ausgeführt sein. In der zweiteiligen Form des ersten Füllkörpers 82 haben die beiden Teile 114 vorzugsweise die in den Figuren 32 und 33 gezeigte Doppelhalbmondform.

Im eingesetzten Zustand weist der erste Füllkörper 82 zwei Aussparungen 116, 118 auf, in die die Anzünderhülse 38 und die Brennkammerhülse 60 hineinragen. Die kleinere erste Aussparung 116 ist kreisförmig und auf den oberen Außendurchmesser der Anzünderhülse 38 abgestimmt. Die größere zweite Aussparung 118 ist ebenfalls kreisförmig und auf den oberen Außendurchmesser der Brennkammerhülse 60 abgestimmt.

Das Verhältnis des Durchmessers der größeren zweiten Aussparung 118 zum Durchmesser der kleineren ersten Aussparung 116 liegt zwischen 1,52 und 2,25, vorzugsweise zwischen 1,67 und 2,03. Beim dargestellten Ausführungsbeispiel beträgt dieses Verhältnis etwa 1,84.

Figur 34 ist ein Schnitt durch den Gasgenerator nach der ersten Bauform (siehe Figur 1), der den Filter 46 in einem oberen Bereich des Gasgenerators zeigt. Der Filter 46, der in den Figuren 35 und 36 separat dargestellt ist, weist einen kritischen Filterabschnitt 120 auf, der der Brennkammerhülse 60 näher als die restlichen Bereiche des Filters 46 kommt.

Dieser kritische Filterabschnitt 120 weist im Vergleich zu den angrenzenden Bereichen des Filters 46 eine verringerte Dicke auf. Dadurch ist zwischen der Brennkammerhülse 60 und dem kritischen Filterabschnitt 120 ein Spalt 122 gebildet. Der kritische Filterabschnitt 120 ist in radialer Richtung komprimiert, d. h. das Filtermaterial ist im kritischen Filterabschnitt 120 höher verdichtet als in den angrenzenden Bereichen.

Die Brennkammerhülse 60 weist dagegen in dem Bereich, der dem kritischen Filterabschnitt 120 gegenüberliegt, eine erhöhte Materialdicke auf (siehe auch Figuren 1 und 5). Im dargestellten Ausführungsbeispiel ist der obere Teil der Brennkammerhülse 60 vollständig umlaufend verdickt.

Das Verhältnis der minimalen radialen Dicke j des kritischen Filterabschnitts 120 zur Dicke k der angrenzenden Bereiche des Filters 46 liegt zwischen 0,43 und 0,93, vorzugsweise zwischen 0,53 und 0,78. Beim dargestellten Ausführungsbeispiel beträgt dieses Verhältnis etwa 0,65.

Das Verhältnis der minimalen radialen Dicke j des kritischen Filterabschnitts 120 zur maximalen Breite m des Spalts 122 zwischen der Brennkammerhülse 60 und dem kritischen Filterabschnitt 120 liegt zwischen 1,17 und 2,85, vorzugsweise zwischen 1,50 und 2,23. Beim dargestellten Ausführungsbeispiel beträgt dieses Verhältnis etwa 1,83.

Wie aus den Figuren 1 und 2 und auch aus Figur 37 ersichtlich ist, erstreckt sich der Filter 46 allgemein in axialer Richtung über die in axialer Richtung verlaufende Umfangswand 16 des Diffusors 10 hinaus in den Bereich des Verschlusskörpers.

Bei der in Figur 37 gezeigten Ausführungsvariante der hohen ersten Bauform des Gasgenerators ist kein separates Stützelement 50 für den Filter 46 vorgesehen. Vielmehr weist der hochgezogene Rand 22 des Verschlusskörpers 12 wenigstens einen Stützabschnitt 124 auf, der eine axiale Halterung für den Filter 46 bildet. Der Stützabschnitt 124 kann durch eine vollständig umlaufende eingeprägte Sicke oder durch mehrere in Umfangsrichtung voneinander beabstandete Sicken gebildet sein. Der Filter 46 stützt sich nur mit einem radial äußeren Bereich auf dem bzw. den Stützabschnitten 124 ab.

### Bezugszeichenliste

- 10: Diffusor
- 12: Verschlusskörper
- 14: Deckenabschnitt
- 16: Umfangswand
- 18: Generatorflansch
- 20: Boden
- 22: Rand
- 24: Bodenöffnungen
- 26: erste Anzündereinheit
- 28: zweite Anzündereinheit
- 30: erster Anzünderträger
- 32: zweiter Anzünderträger
- 34: erster Anzünder
- 36: zweiter Anzünder
- 38: Anzünderhülse
- 40: Anzünderhülsenboden
- 42: Anzünderkammer
- 44: erste Brennkammer
- 46: Filter
- 48: Ringspalt
- 50: Stützelement
- 52: erster Füllkörper (erste Ausführungsvariante)
- 54: fingerförmige Abschnitte
- 56: zweite Brennkammer
- 58: Treibstoffkanister
- 60: Brennkammerhülse
- 62: Treibstoffkanisterseitenwand
- 64: Treibstoffkanisteröffnung
- 66: Treibstoffkanisterboden
- 68: Treibstoffkanisterbodenöffnung
- 70: Randabschnitt
- 72: Brennkammerhülsenboden
- 74: freier Brennkammerhülsenrand
- 76: zweiter Füllkörper
- 78: Ausströmöffnungen
- 78a: erste Ausströmöffnung (Anfang der Reihe)
- 78b: letzte Ausströmöffnung (Ende der Reihe)
- 78c: Ausströmöffnung ohne gegenüberliegende Ausströmöffnung
- 78(1): Ausströmöffnung mit kleinem Strömungsquerschnitt
- 78(2): Ausströmöffnung mit mittlerem Strömungsquerschnitt
- 78(3): Ausströmöffnung mit großem Strömungsquerschnitt
- 80: Übergangsbereich
- 82: erster Füllkörper (zweite Ausführungsvariante)
- 84: Verdämmband
- 86: Dichtring
- 88: Anzünderträgerrand
- 90: Markierung des Anzünderträgers
- 92: Markierung der Anzünderhülse
- 94: verjüngter Abschnitt
- 96: Anzünderhülsenseitenwand
- 98: Überströmöffnungen
- 102: Brennkammerhülsenseitenwand
- 104: Sicke
- 106: Treibstoffkanisterbodenlöcher
- 108: Brennkammerhülsenbodenrandbereich
- 110: Kontaktstelle
- 112: Austrittspalt
- 114: Füllkörperteil
- 116: erste Aussparung des ersten Füllkörpers
- 118: zweite Aussparung des ersten Füllkörpers
- 120: kritischer Filterabschnitt
- 122: Spalt
- 124: Stützabschnitt
- A: Mittelachse des Gasgenerators, des Diffusors u. des Verschlusskörpers
- a: Außendurchmesser des Gasgenerators (ohne Generatorflansch)
- h1: axiale Höhe des Außengehäuses (erste Bauform)
- h2: axiale Höhe des Außengehäuses (zweite Bauform)
- n: Anzahl der Ausströmöffnungen in der Reihe
- M: Mittelpunkt des Generatorflanschs
- I: Länge des rechteckigen Flanschs
- b: Breite des rechteckigen Flanschs
- B: Mittelachse der Anzünderhülse
- α: Winkelbereich
- x: Verbindungslinie
- C: Mittelachse der Brennkammerhülse und des Treibstoffkanisters
- c: minimaler Innendurchmesser der Brennkammerhülse
- d: minimaler Innendurchmesser der Anzünderhülse
- f: Innendurchmessers des Filters
- g: axialer Abstand zwischen Brennkammerhülse und Deckenabschnitt
- i: axialer Abstand zwischen Anzünderhülse und Deckenabschnitt
- j: minimale Dicke des kritischen Filterabschnitts
- k: Dicke des restlichen Filters
- m: maximale Breite des Spalts

## Patentansprüche

1. Gasgenerator für eine Schutzeinrichtung in einem Fahrzeug mit einer Anzünderhülse (38), die einen Anzünder (34) und eine mit einer Verstärkerladung gefüllte Anzünderkammer (42) wenigstens teilweise umschließt und an eine mit Treibstoff gefüllte erste Brennkammer (44) angrenzt, wobei die Anzünderhülse (38) eine von ihrer Mittelachse B entfernte oder sich unsymmetrisch von der Mittelachse B erstreckende Markierung (92) aufweist, die eine vorbestimmte Orientierung der Anzünderhülse (38) angibt, **dadurch gekennzeichnet, dass** die Anzünderhülse (38) versetzt zu einer Mittelachse A eines Diffusors (10) angeordnet ist, und ein Boden (40) der Anzünderhülse (38) einem Deckenabschnitt (14) des Diffusors (10) gegenüberliegt, wobei der Anzünderhülsenboden (40) eine Schräge aufweist, die so auf eine Wölbung des Deckenabschnitts (14) des Diffusors (10) abgestimmt ist, dass die Anzünderhülse (38) nur in der vorbestimmten Orientierung unter den Deckenabschnitt (14) des Diffusors (10) passt.

2. Gasgenerator nach Anspruch 1, **dadurch gekennzeichnet, dass** die Anzünderhülse (38) in axialer Richtung zu dem Boden (40) der Anzünderhülse (38) hin radial verjüngt ausgebildet ist.

3. Gasgenerator nach zumindest einem der vorhergehenden Ansprüche, **dadurch gekennzeichnet, dass** die erste Brennkammer (44) einer ersten Aktivierungsstufe des Gasgenerators zugeordnet ist und der Gasgenerator eine Brennkammerhülse (60) hat, die eine mit Treibstoff gefüllte, einer zweiten Aktivierungsstufe des Gasgenerators zugeordnete zweite Brennkammer (56) wenigstens teilweise umschließt, wobei der axiale Abstand einer offenen Seite der Anzünderhülse (38) von einem Boden (20) eines Verschlusskörpers (12) des Gasgenerators ungleich dem axialen Abstand einer offenen Seite der Brennkammerhülse (60) vom Boden (20) des Verschlusskörpers (12) ist.

4. Gasgenerator nach Anspruch 3, **dadurch gekennzeichnet, dass** die Anzünderhülse (38) und die Brennkammerhülse (60) auf einen ersten Anzünderträger (30) bzw. auf einen zweiten Anzünderträger (32) aufgesteckt sind, wobei die axiale Höhe des Kontaktbereichs zwischen der Anzünderhülse (38) und dem ersten Anzünderträger (30) größer ist als die axiale Höhe des Kontaktbereichs zwischen der Brennkammerhülse (60) und dem zweiten Anzünderträger (32).

5. Gasgenerator nach zumindest einem der voranstehenden Ansprüche 3 bis 4, **dadurch gekennzeichnet, dass** sowohl die Anzünderhülse (38) durch den beim Abbrand der Verstärkerladung entstehenden Druck als auch die Brennkammerhülse (60) durch den beim Abbrand des Treibstoffs entstehenden Druck angehoben werden, in Richtung Deckenabschnitt (14) des Diffusors (10) des Gasgenerators, wobei durch das Anheben der Brennkammerhülse (60) eine Austrittsöffnung, in Form eines Austrittspalts (112), freigegeben wird, die aus der Brennkammerhülse (60) herausführt, wogegen durch das Anheben der Anzünderhülse (38) keine Austrittsöffnung freigegeben wird.

6. Gasgenerator nach zumindest einem der vorhergehenden Ansprüche, mit einer Anzündereinheit (26, 28), **dadurch gekennzeichnet, dass** die Anzündereinheit (26, 28) eine Markierung (90) aufweist, die eine vorbestimmte Orientierung von Anschlusspins der Anzündereinheit (26, 28) vorgibt.

7. Gasgenerator nach Anspruch 6, **dadurch gekennzeichnet, dass** die Anzündereinheit (26, 28) eine vormontierte Einheit mit einem Anzünderträger (30, 32) und einem darin gehaltenen Anzünder (34, 36) ist, die in eine Bodenöffnung (24) eines Verschlusskörpers (12) des Gasgenerators einsetzbar ist.

8. Gasgenerator nach Anspruch 7, wobei der Diffusor (10) mit dem Verschlusskörper (12) ein im Wesentlichen rotationssymmetrisches Außengehäuse des Gasgenerators bildet, und wobei die Wanddicke des Verschlusskörpers (12) wenigstens abschnittsweise größer als die des Diffusors (10) ist, wobei der Verschlusskörper (12) einen im Wesentlichen ebenen Boden (20) aufweist, in dem wenigstens eine Öffnung (24) zur Aufnahme des Anzünderträgers (30, 32) gebildet ist, und wenigstens der Boden (20) eine größere Wanddicke als der Diffusor (10) hat.

9. Gasgenerator nach zumindest einem der vorhergehenden Ansprüche, **dadurch gekennzeichnet, dass** das/ein Brennkammerbauteil (60) den Deckenabschnitt (14) des Diffusors (10) in einem nicht aktivierten Zustand des Gasgenerators wenigstens an einer Stelle (110) berührt, und bezogen auf eine Mittelachse A des Diffusors (10) der axiale Abstand g zwischen dem Brennkammerbauteil (60) und dem Deckenabschnitt (14) variiert.

10. Gasgenerator nach Anspruch 9, **dadurch gekennzeichnet, dass** der maximale Abstand g zwischen dem Brennkammerbauteil (60) und dem Deckenabschnitt (14) des Diffusors (10) zwischen 2,3 und 3,7 mm, vorzugsweise zwischen 2,7 und 3,3 mm liegt und weiter vorzugsweise etwa 3,0 mm beträgt.

11. Gassackmodul für ein Fahrzeug, mit einem Gassack, der ein Volumen von 40 bis 60 Liter aufweist, **gekennzeichnet durch** einen Gasgenerator nach einem der Ansprüche 1 bis 10.

12. Gassackmodul für ein Fahrzeug, mit einem Gassack, der ein Volumen von 60 bis 135 Liter aufweist, **gekennzeichnet durch** einen Gasgenerator nach einem der Ansprüche 1 bis 10.

## Claims

1. An inflator for a protective device in a vehicle, comprising an igniter sleeve (38) which at least partially encloses an igniter (34) and an igniter chamber (42) filled with a booster charge and is adjacent to a first combustion chamber (44) filled with fuel, wherein the igniter sleeve (38) includes a marker (92) distant from its central axis B or extending non-symmetrically from the central axis B which indicates a predetermined orientation of the igniter sleeve (38), **characterized in that** the igniter sleeve (38) is arranged offset with respect to a central axis A of a diffuser (10) and a bottom (40) of the igniter sleeve (38) is opposed to a ceiling portion (14) of the diffuser (10), wherein the igniter sleeve bottom (40) has a slant adapted to a curvature of the ceiling portion (14) of the diffuser (10) such that the igniter sleeve (38) fits below the ceiling portion (14) of the diffuser (10) at the predetermined orientation only.

2. The inflator according to claim 1, **characterized in that** the igniter sleeve (38) is radially tapered in axial direction toward the bottom (40) of the igniter sleeve (38).

3. The inflator according to at least one of the preceding claims, **characterized in that** the first combustion chamber (44) is associated with a first activating stage of the inflator and that the inflator includes a combustion chamber sleeve (60) which at least partially encloses a second combustion chamber (56) filled with fuel which is associated with a second activating stage of the inflator, wherein the axial distance of an open side of the igniter sleeve (38) from a bottom (20) of a closing member (12) of the inflator is unequal to the axial distance of an open side of the combustion chamber sleeve (60) from the bottom (20) of the closing member (12).

4. The inflator according to claim 3, **characterized in that** the igniter sleeve (38) and the combustion chamber sleeve (60) are attached to a first igniter carrier (30) or to a second igniter carrier (32), wherein the axial height of the contact area between the igniter sleeve (38) and the first igniter carrier (30) is larger than the axial height of the contact area between the combustion chamber sleeve (60) and the second igniter carrier (32).

5. The inflator according to at least one of the preceding claims 3 to 4, **characterized in that** both the igniter sleeve (38) is raised by the pressure developed during combustion of the booster charge and the combustion chamber sleeve (60) is raised by the pressure developed during combustion of the fuel in the direction of the ceiling portion (14) of the diffuser (10) of the inflator, wherein by raising the combustion chamber sleeve (60) a discharge orifice, in the form of a discharge gap (112) is released which leads out of the combustion chamber sleeve (60), whereas no discharge orifice is released by raising the igniter sleeve (38).

6. The inflator according to at least one of the preceding claims comprising an igniter unit (26, 28), **characterized in that** the igniter unit (26, 28) has a marker (90) which sets a predetermined orientation of the connecting pins of the igniter unit (26, 28).

7. The inflator according to claim 6, **characterized in that** the igniter unit (26, 28) is a pre-assembled unit having an igniter carrier (30, 32) and an igniter (34, 36) held therein which can be inserted in a bottom orifice (24) of a closing member (12) of the inflator.

8. The inflator according to claim 7, wherein the diffuser (10) forms a substantially rotation-symmetric external housing of the inflator with the closing member (12) and wherein at least in portions the wall thickness of the closing member (12) is larger than that of the diffuser (10), wherein the closing member (12) has a substantially plane bottom (20) in which at least one opening (24) for receiving the igniter carrier (30, 32) is formed and at least the bottom (20) has a larger wall thickness than the diffuser (10).

9. The inflator according to at least one of the preceding claims, **characterized in that** the/a combustion chamber component (60) contacts the ceiling portion (14) of the diffuser (10) in a non-activated state of the inflator at least at one contact point (110) and that the axial distance g between the combustion chamber component (60) and the ceiling portion (14) varies related to a central axis A of the diffuser (10).

10. The inflator according to claim 9, **characterized in that** the maximum distance g between the combustion chamber component (60) and the ceiling portion (14) of the diffuser (10) is between 2.3 and 3.7 mm, preferably between 2.7 and 3.3 mm and further preferably is approx. 3.0 mm.

11. An inflator module for a vehicle comprising an airbag having a volume of 40 to 60 liters, **characterized by** an inflator according to any one of the claims 1 to 10.

12. An inflator module for a vehicle comprising an airbag having a volume of 60 to 135 liters, **characterized by** an inflator according to any one of the claims 1 to 10.

## Revendications

1. Générateur de gaz pour un dispositif de protection dans un véhicule, avec un étui d'allumeur (38) qui entoure au moins partiellement un allumeur (34) et une chambre d'allumage (42) remplie d'une charge renforçatrice et qui se raccorde à une première chambre de combustion (44) remplie de propergol, pour lequel l'étui d'allumeur (38) présente un marquage (92) éloigné de son axe central B ou s'étendant de manière asymétrique par rapport à l'axe central B, qui indique une orientation prédéterminée de l'étui d'allumeur (38), **caractérisé en ce que** l'étui d'allumeur (38) est décalé par rapport à un axe central A d'un diffuseur (10), et un fond (40) de l'étui d'allumeur (38) fait face à une partie couvrante (14) du diffuseur (10), pour lequel le fond de l'étui d'allumeur (40) présente une pente, laquelle est adaptée à une courbure de la partie couvrante (14) du diffuseur (10) de sorte que l'étui d'allumeur (38) s'adapte sous la partie couvrante (14) du diffuseur (10) uniquement dans l'orientation prédéterminée.

2. Générateur de gaz selon la revendication 1, **caractérisé en ce que** l'étui d'allumeur (38) s'amincit radialement dans la direction axiale vers le fond (40) de l'étui d'allumeur (38).

3. Générateur de gaz selon au moins l'une des revendications précédentes, **caractérisé en ce que** la première chambre de combustion (44) est associée à un premier étage d'activation du générateur de gaz et le générateur de gaz présente un étui de chambre de combustion (60), lequel est rempli de propergol, un deuxième étage d'activation du générateur de gaz entoure au moins partiellement une deuxième chambre de combustion (56) associée, pour lequel la distance axiale d'un côté ouvert de l'étui d'allumeur (38) par rapport à une base (20) d'un corps de fermeture (12) du générateur de gaz est différente de la distance axiale d'un côté ouvert de l'étui de la chambre de combustion (60) par rapport à la base (20) du corps de fermeture (12).

4. Générateur de gaz selon la revendication 3, **caractérisé en ce que** l'étui d'allumeur (38) et l'étui de la chambre de combustion (60) sont enfichés respectivement sur un premier support d'allumeur (30) et sur un deuxième support d'allumeur (32), pour lequel la hauteur axiale de la zone de contact entre l'étui d'allumeur (38) et le premier support d'allumeur (30) est supérieure à la hauteur axiale de la zone de contact entre l'étui de la chambre de combustion (60) et le deuxième support d'allumeur (32).

5. Générateur de gaz selon au moins l'une des revendications précédentes 3 à 4, **caractérisé en ce que** l'étui d'allumeur (38) est soulevé par la pression produite lors de la combustion de la charge renforçatrice ainsi que l'étui de la chambre de combustion (60) est soulevé par la pression produite lors de la combustion du propergol, en direction de la section couvrante (14) du diffuseur (10) du générateur de gaz, pour lequel une ouverture de sortie, sous la forme d'une fente de sortie (112), qui mène hors de l'étui de la chambre de combustion (60), est libérée par le soulèvement de l'étui de chambre de combustion (60), tandis qu'aucune ouverture de sortie n'est libérée par le soulèvement de l'étui d'allumeur (38).

6. Générateur de gaz selon l'une au moins des revendications précédentes, comportant une unité d'allumage (26, 28), **caractérisé en ce que** l'unité d'allumage (26, 28) comporte un marquage (90) qui indique une orientation prédéterminée des broches de connexion de l'unité d'allumage (26, 28).

7. Générateur de gaz selon la revendication 6, **caractérisé en ce que** l'unité d'allumage (26, 28) est une unité préassemblée avec un support d'allumeur (30, 32) et un allumeur (34, 36) maintenu dans celui-ci, laquelle unité peut être insérée dans une ouverture sur le fond (24) d'un corps de fermeture (12) du générateur de gaz.

8. Générateur de gaz selon la revendication 7, pour lequel le diffuseur (10) forme avec le corps de fermeture (12), un boîtier extérieur sensiblement à symétrie de révolution du générateur de gaz, et pour lequel l'épaisseur de paroi du corps de fermeture (12) est au moins en partie supérieure à celle du diffuseur (10), pour lequel le corps de fermeture (12) a un fond sensiblement plat (20), pour lequel au moins une ouverture (24) est formée pour recevoir le support d'allumeur (30, 32), et au moins le fond (20) a une épaisseur de paroi plus grande que le diffuseur (10).

9. Générateur de gaz selon au moins une des revendications précédentes, **caractérisé en ce que** le/un composant de chambre de combustion (60) est en contact avec la section couvrante (14) du diffuseur (10) dans un état non activé du générateur de gaz en au moins un point (110), et la distance axiale g entre le composant de chambre de combustion (60) et la section couvrante (14) varie par rapport à un axe central A du diffuseur (10).

10. Générateur de gaz selon la revendication 9, **caractérisé en ce que** la distance maximale g entre le composant de la chambre de combustion (60) et la section couvrante (14) du diffuseur (10) est comprise entre 2,3 et 3,7 mm, de préférence entre 2,7 et 3,3 mm, et encore plus préférablement d'environ 3,0 mm .

11. Module airbag pour un véhicule, comprenant un coussin gonflable ayant un volume de 40 à 60 litres, **caractérisé par** un générateur de gaz selon l'une quelconque des revendications 1 à 10.

12. Module airbag pour un véhicule, comprenant un coussin gonflable ayant un volume de 60 à 135 litres, **caractérisé par** un générateur de gaz selon l'une quelconque des revendications 1 à 10.
